# EUROPEAN PATENT SPECIFICATION

(11) **EP 1 256 617 B1**
(45) Date of publication and mention of the grant of the patent: **15.09.2004**
(21) Application number: 02007978.6
(22) Date of filing: 10.04.2002
(51) Int. Cl.: C09K 19/38, C09K 19/20, C09K 19/46

(54) **Polymerizable liquid crystal material**
Polymerisierbares Flüssigkristallmaterial
Matériau liquide cristalline polymérisable

(30) Priority: 08.05.2001 EP 01110189; 19.07.2001 EP 01116737
(43) Date of publication of application: 13.11.2002
(73) Proprietor: MERCK PATENT GmbH, 64293 Darmstadt (DE)
(72) Inventor: Dunn, Christopher J, Portswood, Southampton, SO14 6BD (GB); Greenfield, Simon, Poole, Dorset BH17 7YA (GB); Harding, Richard, Eastleigh, Hants., SO50 7JY (GB); Hassall, Ian Victor Edward, Burton, Christchurch, Dorset BH23 7EU (GB); May, Alison Linda, Wimborne, Dorset BH21 3XF (GB); Vaughan-Spickers, Julian Frederick Samuel, North Baddesley, Southampton,SO52 9NE (GB)

(56) References cited:
- WO-A-93/22397
- WO-A-95/22586
- WO-A-97/00600
- WO-A-98/00428
- WO-A-99/45082
- DE-A- 19 504 224
- GB-A- 2 328 207
- US-A- 5 995 184
- US-A1- 2002 017 633

## Description

### Field of the Invention

The invention relates to a polymerizable liquid crystal material comprising at least one polymerizable surface-active compound, its use for the preparation of anisotropic polymer films, and the use of the liquid crystal material and the polymer films in optical and electrooptical devices, for decorative and security applications.

### Background and Prior Art

Polymerizable liquid crystal materials are known in prior art for the preparation of anisotropic polymer films with uniform orientation. These films are usually prepared by coating a thin layer of a polymerizable liquid crystal mixture onto a substrate, aligning the mixture into uniform orientation and polymerizing the mixture.

For specific applications it is required to induce planar alignment in the liquid crystal layer, i.e. where the liquid crystal molecules are oriented substantially parallel to the layer. The alignment is then frozen in by polymerizing the liquid crystal mixture in situ. For example, oriented films or layers of polymerized nematic liquid crystal material with planar alignment are useful as A-plate compensators or polarizers. Another important application are oriented films or layers of polymerized cholesteric liquid crystal material having twisted molecular structure. If the cholesteric material has planar alignment, these films show selective reflection of light where the reflection colour is dependent on the viewing angle. They can be used for example as circular polarizers, colour filters or for the preparation of effect pigments for decorative or security applications.

Planar alignment can be achieved for example by treatment of the substrate onto which the liquid crystal material is coated, such as rubbing or application of alignment layers, or by applying shear forces to the liquid crystal material, for example during or after coating.

It is also known in prior art that planar alignment of a liquid crystal material on a single substrate, with one surface of the liquid crystal material being open to the air, can be achieved or enhanced by addition of a surface active compound to the liquid crystal material.

For example, WO 99/45082 describes an optical retardation film that is obtained from a layer of polymerizable liquid crystal material with planar alignment comprising one or more fluorocarbon surfactants. US 5,995,184 reports a method of making a phase retardation plate from a layer of polymerizable liquid crystal material with planar alignment, where a surface active material, like for example a polyacrylate, polysilicone or organosilane, is added to the liquid crystal material to reduce the tilt angle at the liquid crystal /air interface of the liquid crystal layer, ***however, it does not disclose a polymerizable material as claimed in the present application*.**
However, the methods to achieve planar alignment described in the above documents have several drawbacks. Thus, the surfactants often tend to phase separate from the liquid crystal material during or after polymerization. Also, if another layer is provided onto the polymerized liquid crystal film comprising the surfactant, the surfactant tends to migrate into the second layer. For example, in specific applications, such as cholesteric colour filters, a film of polymerized cholesteric liquid crystal material is part of a composite LC cell, in which other layers need to be added to the cholesteric film, such as, but not restricted to, other liquid crystal, retardation or topcoat layers etc. During the addition of the subsequent layers conventional surfactant molecules are leached out of the bottom layer and migrate to the air interface. This results in a sample/air interface region which becomes progressively more concentrated in surfactant. Hence, subsequent layers have different surface energies and can no longer be thought of as being identical. The migration of surfactant can also cause a problem where it is desired to place a top layer which does not contain a surfactant, or where the surfactant can also cause other species to migrate from one layer to the next.

It was therefore an aim of the present invention to provide a polymerizable liquid crystal material for the preparation of polymer films with planar alignment that does not have the drawbacks described above. Other aims of the present invention are immediately evident to the person skilled in the art from the following detailed description.

The inventors of the present invention have found that the above aims can be achieved by providing a polymerizable liquid crystal mixture that comprises one or more polymerizable surface-active compounds. The present invention reports on the use of such polymerizable surfactants in mixtures of polymerizable mesogenic materials. The polymerizable surfactants are readily polymerized into the liquid crystal film and hence any migration of the surfactant through to subsequent layers is drastically hindered. The present invention further demonstrates how it is possible to build a stack of different layers in which one or more layers contains a low surface energy surfactant, such as a fluorochemical based surfactant, whilst maintaining the desired physical properties of the subsequent layers.

### Summary of the Invention

One object of the present invention is a polymerizable liquid crystal material comprising at least one polymerizable ***fluorocarbon surfactant***.

Another object of the present invention is a method of preparing an anisotropic polymer film with planar alignment with a low tilt angle, by applying a polymerizable liquid crystal material comprising one or more polymerizable surface-active compounds onto a substrate, aligning the material into planar orientation and polymerizing the material.

Another object of the present invention is an anisotropic polymer film with planar alignment and a low tilt angle obtained from a polymerizable liquid crystal material comprising one or more polymerizable surface-active compounds.

Another object of the present invention is the use of the polymerizable liquid crystal material and the polymer film according to the present invention as optical films for optical devices, decorative or security use, like for example alignment layers, polarizers, compensators, beam splitters, reflective films, colour filters, holographic elements, hot stamping foils, coloured images, decorative or security markings, and for the preparation of liquid crystal pigments for decorative or security applications.

Another object of the present invention is an alignment layer obtained from a polymerizable liquid crystal material comprising one or more polymerizable surface-active compounds.

Another object of the present invention is a cholesteric colour filter obtained from a polymerizable cholesteric liquid crystal material comprising one or more polymerizable surface-active compounds.

### Definitions of Terms

The term 'film' as used in this application includes self-supporting, i.e. free-standing, films that show more or less pronounced mechanical stability and flexibility, as well as coatings or layers on a supporting substrate or between two substrates.

The term 'mesogenic compounds' as used in the foregoing and the following should denote compounds with a rod-shaped, lath-shaped or disk-shaped mesogenic group, i.e. a group with the ability to induce mesophase behaviour. These compounds do not necessarily have to exhibit mesophase behaviour by themselves. It is also possible that these compounds show mesophase behaviour only in mixtures with other compounds or when the mesogenic compounds or the mixtures comprising them are polymerized. Rod-shaped and lath-shaped mesogenic groups are especially preferred.

For the sake of simplicity, the term 'liquid crystal material' is used hereinafter for both liquid crystal materials and mesogenic materials, and the term 'mesogen' is used for the mesogenic groups of the material.

Unles stated otherwise, "tilt angle" of an anisotropic or liquid crystal layer or film is the average tilt angle throughout the film.

### Detailed Description of the Invention

The polymerizable liquid crystal mixture according to the present invention preferably comprises one or more polymerizable mesogenic compounds and a polymerizable surfactant component comprising one or more surface-active compounds. When the liquid crystal mixture is coated onto a substrate, the surface-active compounds reduce the tilt angle of the liquid crystal molecules in the coated layer and thus enhance the planar alignment of the liquid crystal mixture. The surfactant copolymerizes with the monomers of the liquid crystal mixture, and is thus chemically bound into the forming polymer film. Thereby migration or phase separation of the surfactant are prevented.

The alignment of the polymerizable liquid crystal material can further be controlled by selection of the polymerizable mesogenic or liquid crystalline compounds. Thus, it was found that planar alignment with a low tilt angle can be achieved if the mixture contains only low amounts of polymerizable mesogenic compounds having non-polar terminal groups, and preferably consists essentially of compounds having polar terminal groups.

'Polar group' in particular means a group selected from halogen, CN, NO₂, OH, OCH₃, OCN, SCN, vinyloxy, acryl, methacryl, chloroacryl, epoxy, carbonyl or carboxyl with up to 4 C atoms, or mono-, oligo-, or polyfluorinated alkyl or alkoxy with 1 to 5 C atoms. Halogen is preferably F or Cl. '

'Unpolar group' in particular means an aliphatic or aromatic alkyl group with 1 or more C atoms or an alkenyl or alkoxy group with 2 or more C atoms that is not a polar group.

Especially preferred polar groups are vinyloxy, acryl, methacryl, epoxy, F, Cl, OH, CN, OCH₃, COCH₃, COC₂H₅, COOCH₃, COOC₂H₅, CF₃, C₂F₅, OCF₃, OCHF₂, and OC₂F₅, in particular vinyloxy, acryl, methacryl, epoxy, F, Cl, CN, OCH₃ and OCF₃.

Particularly preferred embodiments relate to a polymerizable liquid crystal material
- comprising less than 40 %, preferably less than 20 %, very preferably less than 10 %, in particular less than 5 % by weight of polymerizable mesogenic compounds with an non-polar terminal group,
- wherein the ratio of polymerizable mesogenic compounds with at least one polar terminal group and polymerizable mesogenic compounds with an non-polar terminal group is at least 2:1, preferably at least 3:1, in particular at least 5:1,
- containing no polymerizable mesogenic compounds with an non-polar group,
- essentially consisting of polymerizable mesogenic compounds with at least one polar terminal group,
- comprising 0.01 to 15 %, preferably 0.1 to 5 % by weight of polymerizable surface-active compounds,
- comprising one or more surface-active compounds selected from polymerizable fluorocarbon surfactants, in particular fluorocarbon acrylates or fluorocarbon methacrylates
- comprising one or more surface-active compounds having a surface tension of 15 to 50 mNm⁻¹,
- comprising one or more surface-active compounds having a surface tension of less than 25 mNm⁻¹,
- comprising in addition to the polymerizable surfactants only polymerizable mesogenic compounds with two or more, preferably two polymerizable groups,
- comprising at least 20 % by weight of one or more polymerizable monoreactive mesogenic compounds comprising one polymerizable group and one polar terminal group,
- comprising less than 5 % of non-polymerizable components,
- comprising one or more chiral compounds,
- comprising less than 15 % of chiral components.

The surface-active compounds comprise at least one, preferably one or two polymerizable groups. They may also be mesogenic or liquid crystalline. Suitable surface-active compounds are for example those comprising one or more polymerizable groups selected from acryl, methacryl, epoxy, vinyl, vinyloxy, styrene or propenyl ether groups, in particular acryl, methacryl, epoxy and vinyloxy groups.

Preferably the polymerizable surface-active compounds comprise a polymerizable group that polymerizes under the same conditions as at least one of the polymerizable liquid crystal compounds of the mixture. Particularly preferably the polymerizable groups of the surface-active compounds and of the liquid crystal mixture are the same.

The average tilt angle of a polymerizable liquid crystal material according to the present invention on a single substrate, with one surface being open to the air, can be tailored between the inherent tilt angle of the liquid crystal material on the substrate, which is typically approximately 20 - 30 °, to approximately 0°. The use of short chain, mixed fluorocarbon / hydrocarbon surfactants is preferred because their lower surface energy results in a greater reduction in the surface tension of the mixture for a given concentration of surfactant. For example, typical values for the surface tension of hydrocarbon, silicone and fluorochemical surfactants are ≥ 25, 20 - 35 and 16 - 20 mNm⁻¹ respectively, as reported by L. Gehlhoff, "Fluorosurfactants for Paint and Coatings", product information of 3M (St. Paul, Minnesota, USA). The low surface tension of these fluorochemical surfactants has been utilised in prior art, for example in levelling agents for coatings (L.Gehlhoff "Fluorosurfactants for Paint and Coatings, 3M product information). Molecules with a low surface energy readily accumulate at the CLC/air interface, promoting the alignment effect.

Especially preferred are acrylic monomers with a perfluoroalkyl group or mixtures thereof, like e.g. Fluorad FX-13® and FX-14® commercially available from 3M (St. Paul, Minnesota, USA), which have the structures shown below

CₙF₂ₙ₊₁SO₂N(C₂H₅)CH₂CH₂OCOCH=CH₂ IX (FX-13)

CₙF₂ₙ₊₁SO₂N(C₂H₅)CH₂CH₂OCOC(CH₃)=CH₂ X (FX-14)

wherein n is an integer from 4 to 8, and the perfluoroalkyl group may be linear or branched.

Upon using these surfactants it is possible to produce anisotropic polymer films with planar alignment having a low tilt angle in the range from 0 to 3 degrees, in particular 0 to 1.5 degrees. In the ideal case the tilt angle is approximately 0 degrees.

A preferred embodiment relates to a polymer film with planar alignment comprising a polymerized nematic liquid crystal material according to the present invention.

Another preferred embodiment relates to a polymer film with planar alignment comprising a polymerized cholesteric liquid crystal material according to the present invention.

In a preferred embodiment the polymerizable liquid crystal material comprises at least one polymerizable compound having two or more polymerizable functional groups (di- or multireactive or di- or multifunctional compound), which can be a mesogenic compound or a surface-active compound. Upon polymerization of such a mixture a three-dimensional polymer network is formed. A polymer film made of such a network is self-supporting and shows a high mechanical and thermal stability and a low temperature dependence of its liquid crystal properties properties. In the ideal case the liquid crystal properties of the polymer film are temperature independent.

By varying the concentration of the multifunctional mesogenic or non mesogenic compounds, the crosslink density of the resulting polymer film and thereby its physical and chemical properties such as the glass transition temperature, which is also important for the temperature dependence of the optical properties of the film, the thermal and mechanical stability or the solvent resistance can be tuned easily.

Especially preferably the polymerizable material comprises 5 to 100 %, in particular 25 to 80 %, very preferably 45 to 70 %, by weight of multireactive mesogenic compounds. Direactive mesogenic compounds are particularly preferred.

The polymerizable mesogenic compounds of the liquid crystal material are preferably selected of formula I

P-(Sp-X)ₙ-MG-R I

wherein
- P: is a polymerizable group,
- Sp: is a spacer group having 1 to 25 C atoms,
- X: is -O-, -S-, -CO-, -COO-, -OCO-, -CO-NH-, -NH-CO-, - CH₂CH₂-, -OCH₂-, -CH₂O-, -SCH₂-, -CH₂S-, -CH=CH-, - CH=CH-COO-, -OCO-CH=CH-, -C≡C-, or a single bond,
- n: is 0 or 1,
- MG: is a mesogenic group, and
- R: is H, CN, NO₂, halogen or a straight-chain or branched alkyl radical with up to 25 C atoms which may be unsubstituted, mono- or polysubstituted by halogen or CN, it being also possible for one or more non-adjacent CH₂ groups to be replaced, in each case independently from one another, by -O-, -S-, -NH-, -N(CH₃)-, -CO-, -COO-, -OCO-, -OCO-O-, -S-CO-, -CO-S- or -C=C- in such a manner that oxygen atoms are not linked directly to one another, or alternatively R is denoting P-(Sp-X)ₙ-.

MG in formula I is preferably selected of formula II

-A¹-Z¹-(A²-Z²-)ₘ-A³- II

wherein
- Z¹ and Z²: are each independently -COO-, -OCO-, -CH₂CH₂-, - OCH₂-, -CH₂O-, -CH=CH-, -CH=CH-COO-, -OCO-CH=CH-, - C≡C-, or a single bond,
- A¹, A² and A³: are each independently 1,4-phenylene in which, in addition, one or more CH groups may be replaced by N, 1,4-cyclohexylene in which, in addition, one or two non-adjacent CH₂ groups may be replaced by O and/or S, 1,4-cyclohexenylene, 1,4-bicyclo(2,2,2)octylene, piperidine-1,4-diyl, naphthalene-2,6-diyl, decahydronaphthalene-2,6-diyl, or 1,2,3,4-tetrahydro-naphthalene-2,6-diyl, it being possible for all these groups to be unsubstituted, mono- or polysubstituted with F,CI, OH, CN, NO₂ or alkyl, alkoxy or alkanoyl groups having 1 to 7 C atoms wherein one or more H atoms may be substituted by F or Cl, and
- m: is 0, 1 or 2.

A smaller group of preferred mesogenic groups of formula II is listed below. For reasons of simplicity, Phe in these groups is 1,4-phenylene, PheL is a 1,4-phenylene group which is substituted by 1 to 4 groups L, with L being F, Cl, CN, OH, NO₂ or an optionally fluorinated or chlorinated alkyl, alkoxy or alkanoyl group with 1 to 7 C atoms, and Cyc is 1,4-cyclohexylene. The following list of preferred mesogenic groups is comprising the subformulae II-1 to II-25 as well as their mirror images

- Phe-Z-Phe- II-1

- Phe-Z-Cyc- II-2

- Cyc-Z-Cyc- II-3

- PheL-Z-Phe- II-4

- PheL-Z-Cyc- II-5

- PheL-Z-PheL- II-6

- Phe-Z-Phe-Z-Phe- II-7

- Phe-Z-Phe-Z-Cyc- II-8

- Phe-Z-Cyc-Z-Phe- II-9

- Cyc-Z-Phe-Z-Cyc- II-10

- Phe-Z-Cyc-Z-Cyc- II-11

- Cyc-Z-Cyc-Z-Cyc- II-12

- Phe-Z-Phe-Z-PheL- II-13

- Phe-Z-PheL-Z-Phe- II-14

- PheL-Z-Phe-Z-Phe- II-15

- PheL-Z-Phe-Z-PheL- II-16

- PheL-Z-PheL-Z-Phe- II-17

- PheL-Z-PheL-Z-PheL- II-18

- Phe-Z-PheL-Z-Cyc- II-19

- Phe-Z-Cyc-Z-PheL- II-20

- Cyc-Z-Phe-Z-PheL- II-21

- PheL-Z-Cyc-Z-PheL- II-22

- PheL-Z-PheL-Z-Cyc- II-23

- PheL-Z-Cyc-Z-Cyc- II-24

- Cyc-Z-PheL-Z-Cyc- II-25

Particularly preferred are the subformulae II-1, II-2, II-4, II-6, II-7, II-8, II-11, II-13, II-14, II-15 and II-16.

In these preferred groups Z in each case independently has one of the meanings of Z¹ as given in formula I. Preferably Z is -COO-, -OCO-, -CH₂CH₂-, -C≡C- or a single bond.

Very preferably the mesogenic group MG is selected from the following formulae and their mirror images 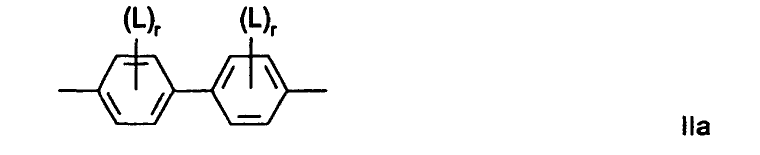 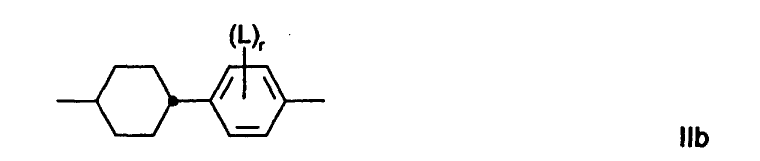 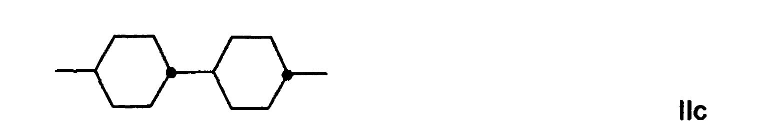 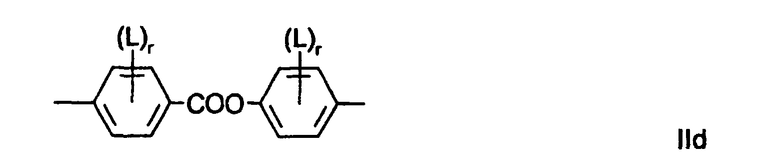 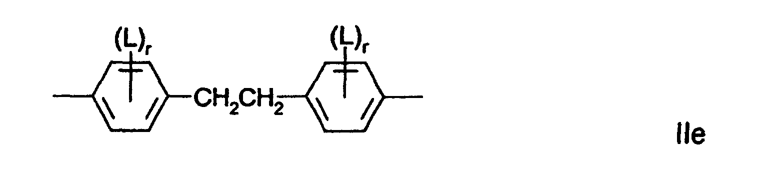 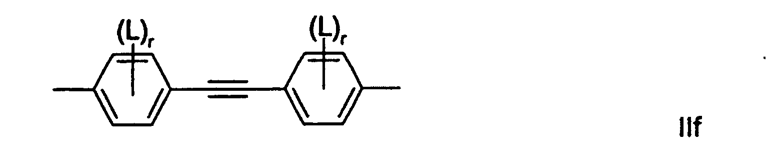 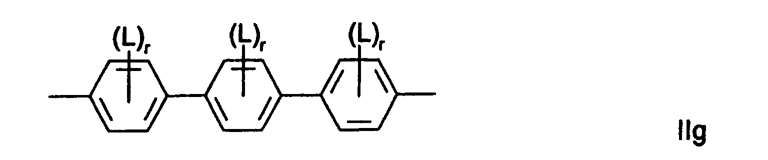 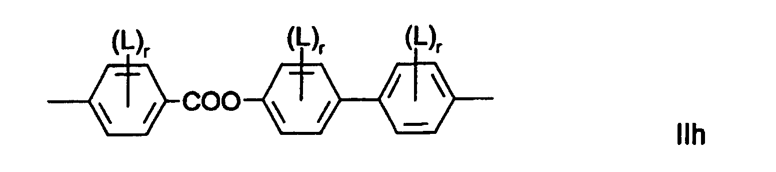 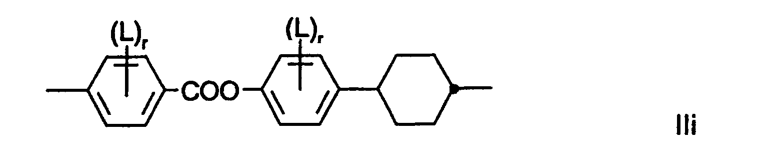 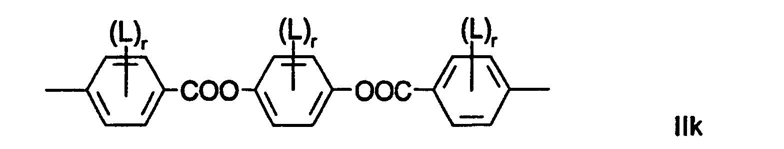 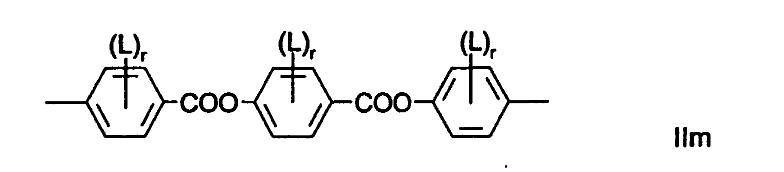 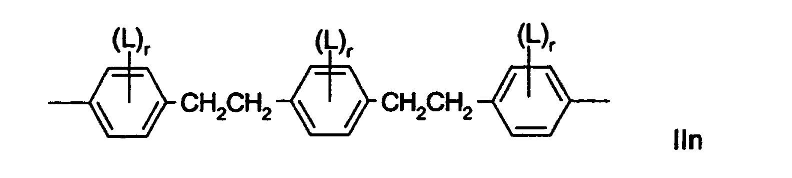 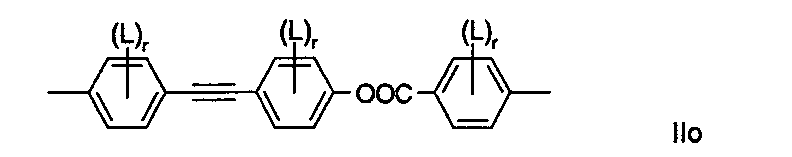 wherein L has the meaning given above and r is 0, 1 or 2.

The group 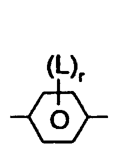 in these preferred formulae is very preferably denoting 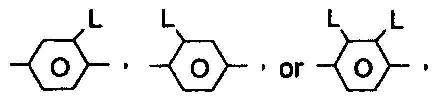 furthermore 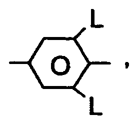 with L having each independently one of the meanings given above.

Particularly preferred are the subformulae IId, IIg, IIh, IIi, IIk and IIo, in particular the subformulae IId and Ilk.

L is preferably F, Cl, CN, OH, NO₂, CH₃, C₂H₅, OCH₃, OC₂H₅, COCH₃, COC₂H₅, COOCH₃, COOC₂H₅, CF₃, OCF₃, OCHF₂, OC₂F₅, in particular F, Cl, CN, CH₃, C₂H₅, OCH₃, COCH₃ and OCF₃, most preferably F, Cl, CH₃, OCH₃ and COCH₃.

In another preferred embodiment the polymerizable mixture comprises at least one chiral polymerizable compound of formula I comprising a mesogenic group having at least one center of chirality.

In these compounds *MG is* preferably selected according to the following formulae

-(A¹-Z)ₐ-G¹- II*-1

-(A¹-Z)ₐ-G²-(Z-A²)_{b}- II*-2

wherein
A¹, A² and Z have the meaning given in formula II,
a and b are independently of each other 0, 1 or 2,
G¹ together with R in formula I forms a terminal chiral group, and
G² is a bivalent chiral group.

Preferred chiral groups G¹-R are for example cholesteryl, terpenoid radicals as disclosed e.g. in WO 96/17901, preferably selected from menthyl, neomenthyl, campheyl, pineyl, terpineyl, isolongifolyl, fenchyl, carreyl, myrthenyl, nopyl, geraniyl, linaloyl, neryl, citronellyl and dihydrocitronellyl, in particular menthyl or menthone derivatives or terminal chiral sugar derivatives comprising a mono- or bicyclic radical with pyranose or furanose rings like, for example, a group derived from the chiral sugars disclosed in WO 95/16007.

Preferred chiral groups G² are for example cholesteryl or groups derived from sugars, binaphthyl derivatives, or optically active glycols, especially ethane-1,2-diol substituted in 1- and or 2-position with alkyl or aryl groups. In case of sugar groups, these are preferably selected from mono- and dicyclic groups comprising pentose or hexose rings.

Particularly preferred are the following groups G² 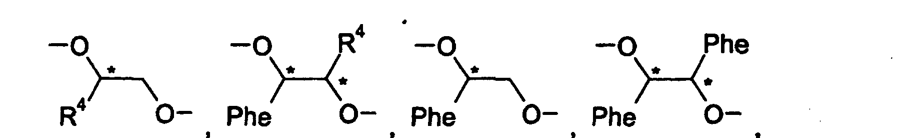 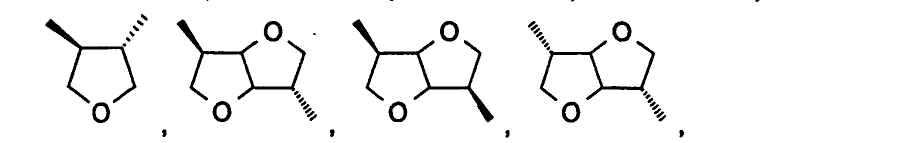 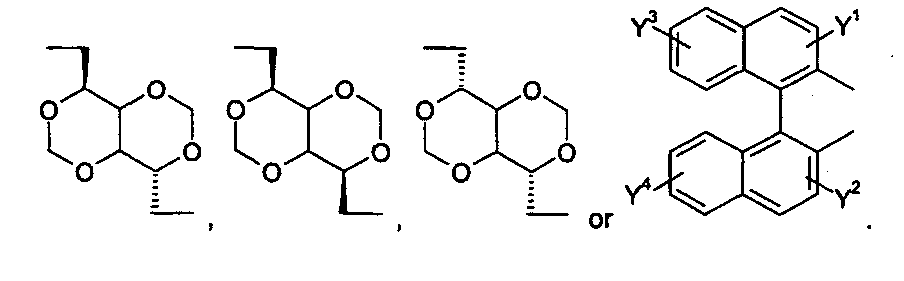 wherein Phe has the meaning given above, R⁴ is F or optionally fluorinated alkyl with 1 to 4 C atoms and Y¹, Y², Y³ and Y⁴ have one of the meanings of R¹ in formula I.

Preferably G² is dianhydrosorbitol, substituted ethane diol like 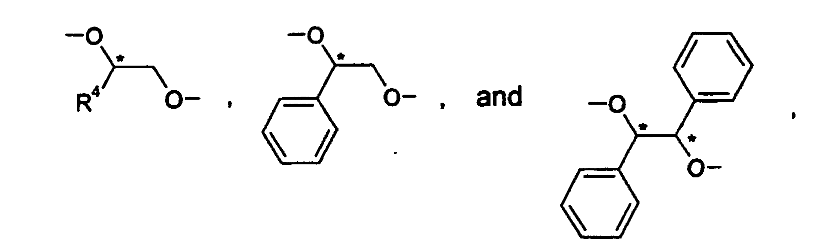 wherein R⁴ is F, CH₃ or CF₃,
or optionally substituted binaphthyl 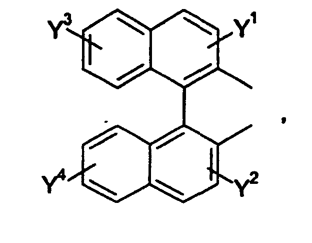 wherein Y¹, Y², Y³ and Y⁴ are H, F or optionally fluorinated alkyl with 1 to 8 C atoms.

Preferably -(A¹-Z)ₐ- and -(Z-A²)_{b}- in formula II1* and II2* are selected of the above disclosed preferred formulae II-1 to II-25 and IIa to IIo, most preferably of formulae II1 to II6 and IIa to IIf.

In case of a polymerizable mesogenic compounds with an non-polar polar group, R is preferably alkyl with up to 15 C atoms or alkoxy with 2 to 15 C atoms.

If R is an alkyl or alkoxy radical, i.e. where the terminal CH₂ group is replaced by -O-, this may be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one CH₂ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

In case of a polymerizable mesogenic compounds with a terminal polar group, R is selected from CN, NO₂, halogen, OCH₃, OCN, SCN, COR¹, COOR¹ or a mono- oligo- or polyfluorinated alkyl or alkoxy group with 1 to 4 C atoms. R¹ is optionally fluorinated alkyl with 1 to 4, preferably 1 to 3 C atoms. Halogen is preferably F or Cl. Especially preferably R in these compounds is selected of F, Cl, CN, NO₂, OCH₃, COCH₃, COC₂H₅, COOCH₃, COOC₂H₅, CF₃, C₂F₅, OCF₃, OCHF₂, and OC₂F₅, in particular of F, Cl, CN, OCH₃ and OCF₃.

In the compounds of formula I R may be an achiral or a chiral group. In case of a chiral group it is preferably selected according to the following formula III: 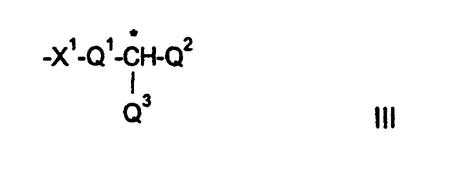 wherein
- X¹: is -O-, -S-, -CO-, -COO-, -OCO-, -OCOO- or a single bond,
- Q¹: is an alkylene or alkylene-oxy group with 1 to 10 C atoms or a single bond,
- Q²: is an alkyl or alkoxy group with 1 to 10 C atoms which may be unsubstituted, mono- or polysubstituted by halogen or CN, it being also possible for one or more non-adjacent CH₂ groups to be replaced, in each case independently from one another, by - C≡C-, -O-, -S-, -NH-, -N(CH₃)-, -CO-, -COO-, -OCO-, -OCO-O-, - S-CO- or -CO-S- in such a manner that oxygen atoms are not linked directly to one another,
- Q³: is halogen, a cyano group or an alkyl or alkoxy group with 1 to 4 C atoms different from Q².

In case Q¹ in formula III is an alkylene-oxy group, the O atom is preferably adjacent to the chiral C atom.

Preferred chiral groups R are 2-butyl (=1-methylpropyl), 2-methylbutyl, 2-methylpentyl, 3-methylpentyl, 2-ethylhexyl, 2-propylpentyl, 2-octyl, in particular 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy for example.

In addition, compounds of formula I containing an achiral branched group R may occasionally be of importance, for example, due to a reduction in the tendency towards crystallization. Branched groups of this type generally do not contain more than one chain branch. Preferred achiral branched groups are isopropyl, isobutyl (=methylpropyl), isopentyl (=3-methylbutyl), isopropoxy, 2-methylpropoxy and 3-methylbutoxy.

Another preferred embodiment of the present invention relates to compounds of formula I wherein R is denoting P-(Sp-X)ₙ-.

The polymerizable group P in formula I is preferably selected from CH₂=CW¹-COO-, 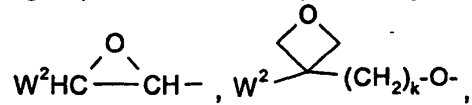 CH₂=CW²-O-, CH₃-CH=CH-O-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- and W⁴W⁵W⁶Si-, with W¹ being H, Cl, CN, phenyl or alkyl with 1 to 5 C-atoms, in particular H, Cl or CH₃, W² and W³ being independently of each other H or alkyl with 1 to 5 C-atoms, in particular methyl, ethyl or n-propyl, W⁴, W⁵ and W⁶ being independently of each other Cl, oxaalkyl or oxacarbonylalkyl with 1 to 5 C-atoms, Phe being 1,4-phenylene and k₁ and k₂ being independently of each other 0 or 1.

Very preferably P is an acrylate group, a methacrylate group, a vinyloxy group or an epoxy group, in particular an acrylate or epoxy group.

As for the spacer group Sp in formula I all groups can be used that are known for this purpose to the skilled in the art. The spacer group Sp is preferably a linear or branched alkylene group having 1 to 20 C atoms, in particular 1 to 12 C atoms, in which, in addition, one or more non-adjacent CH₂ groups may be replaced by -O-, -S-, -NH-, - N(CH₃)-, -CO-, -O-CO-, -S-CO-, -O-COO-, -CO-S-, -CO-O-, - CH(halogen)-, -CH(CN)-, -CH=CH- or -C≡C-.

Typical spacer groups are for example -(CH₂)ₒ-, -(CH₂CH₂O)ₚ-CH₂CH₂-, -CH₂CH₂-S-CH₂CH₂- or -CH₂CH₂-NH-CH₂CH₂-,with o being an integer from 2 to 12 and p being an integer from 1 to 3.

Preferred spacer groups are ethylene, propylene, butylene, pentylene, hexylene, heptylene, octylene, nonylene, decylene, undecylene, dodecylene, octadecylene, ethyleneoxyethylene, methyleneoxybutylene, ethylene-thioethylene, ethylene-N-methyliminoethylene, 1-methylalkylene, ethenylene, propenylene and butenylene for example.

Especially preferred are inventive compounds of formula I wherein Sp is denoting an alkyl or alkoxy group with 2 to 8 C atoms. Straight-chain alkyl or alkoxy groups are especially preferred.

In another preferred embodiment of the invention the chiral compounds of formula I comprise at least one spacer group Sp that is a chiral group of the formula IV: 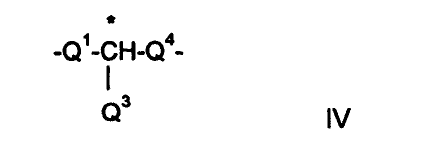 wherein
Q¹ and Q³ have the meanings given in formula III, and
Q⁴ is an alkylene or alkylene-oxy group with 1 to 10 C atoms or a single bond, being different from Q¹.

In the event that R is denoting P-Sp-X- , the two spacer groups Sp in the compounds of formula I may be identical or different.

Of the preferred compounds described above particularly preferred are those wherein n is 1.

Further preferred are compounds comprising both a group P-(Sp-X)ₙ- wherein n is 0 and a group P-(Sp-X)ₙ- wherein n is 1.

The compounds of formula I can be synthesized according to or in analogy to methods which are known per se and which are described in standard works of organic chemistry such as, for example, Houben-Weyl, Methoden der organischen Chemie, Thieme-Verlag, Stuttgart. Some specific methods of preparation can be taken from the examples.

Examples of suitable polymerizable mesogenic compounds that can be used as components of the polymerizable CLC material, are disclosed for example in WO 93/22397; EP 0,261,712; DE 195,04,224; WO 95/22586 and WO 97/00600. The compounds disclosed in these documents, however, are to be regarded merely as examples that shall not limit the scope of this invention. Preferably the polymerizable CLC mixture comprises at least one polymerizable mesogenic compound having one polymerizable functional group and at least one polymerizable mesogenic compound having two or more polymerizable functional groups.

Examples of especially useful monoreactive chiral and achiral polymerizable mesogenic compounds are shown in the following list of compounds, which should, however, be taken only as illustrative and is in no way intended to restrict, but instead to explain the present invention: 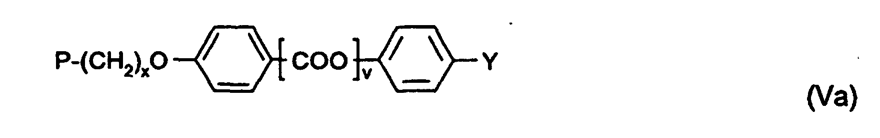 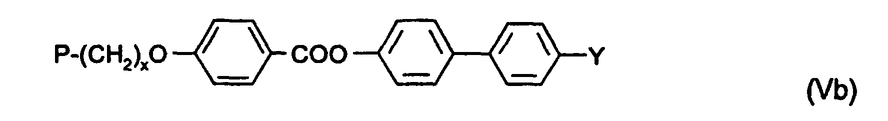 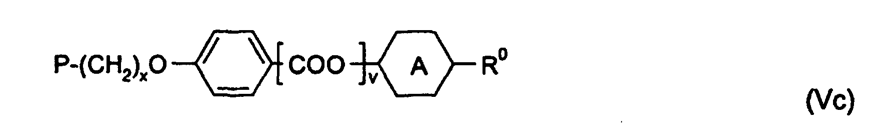 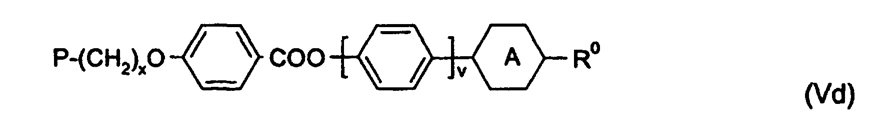 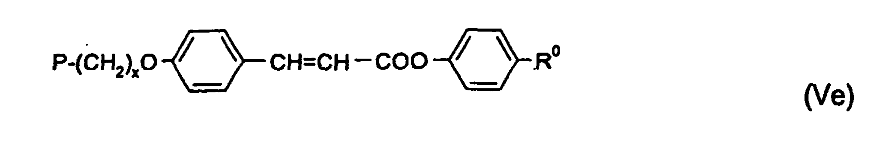 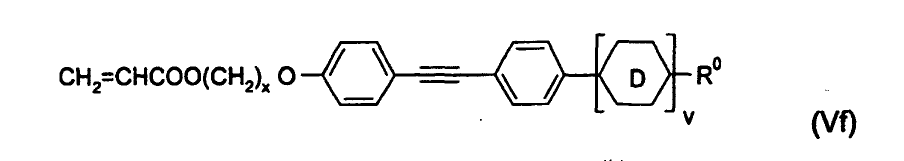 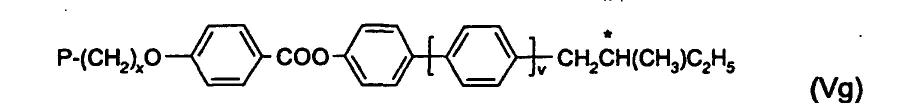 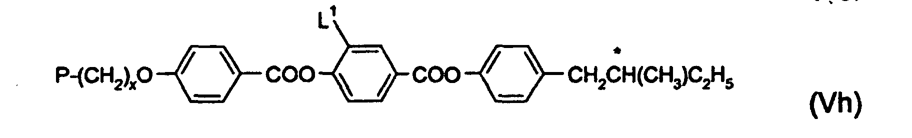 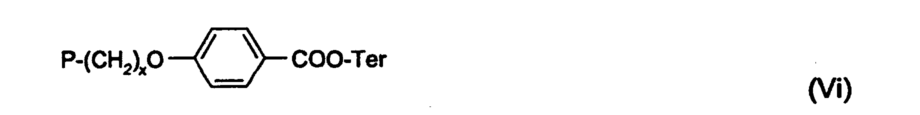 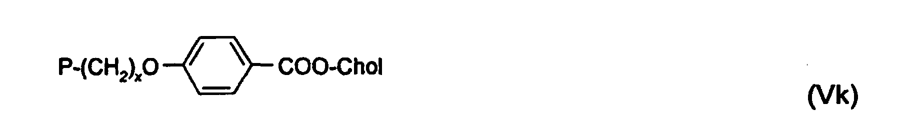 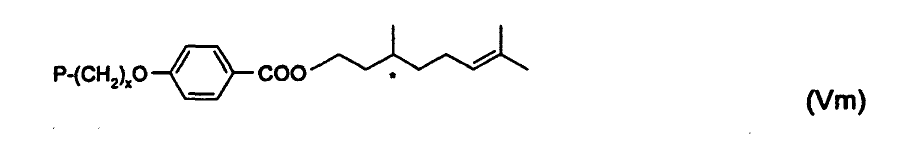 wherein, P has one of the meanings of formula I and its preferred meanings as mentioned above, x is an integer from 1 to 12 , A is 1,4-phenylene or 1,4-cyclohexylene, v is 0 or 1, Y is a polar group as defined above, R⁰ is an non-polar alkyl or alkoxy group as defined above, Ter is a terpenoid radical like e.g. menthyl, Chol is a cholesteryl group, and L¹ and L² are each independently H, F, Cl, OH, CN, NO₂ or an optionally halogenated alkyl, alkoxy or carbonyl group with 1 to 7 C atoms.

Examples of useful direactive chiral and achiral polymerizable mesogenic compounds are shown in the following list of compounds, which should, however, be taken only as illustrative and is in no way intended to restrict, but instead to explain the present invention 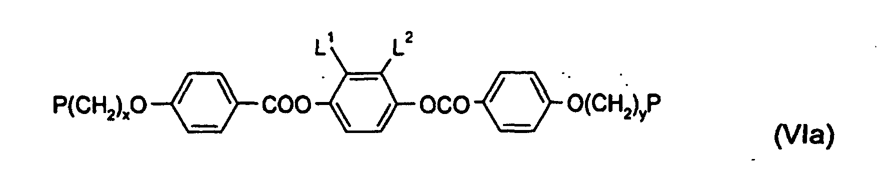 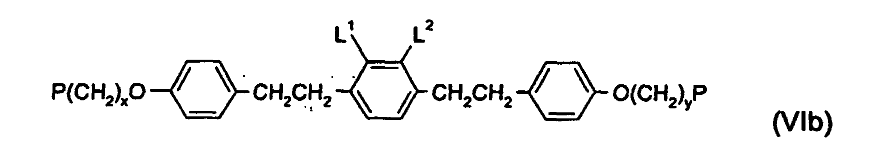 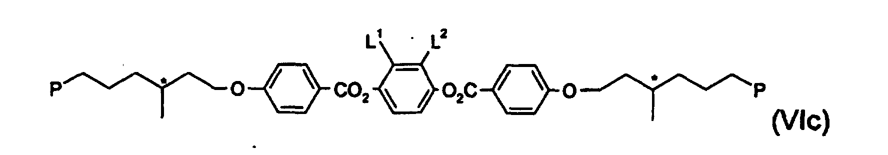 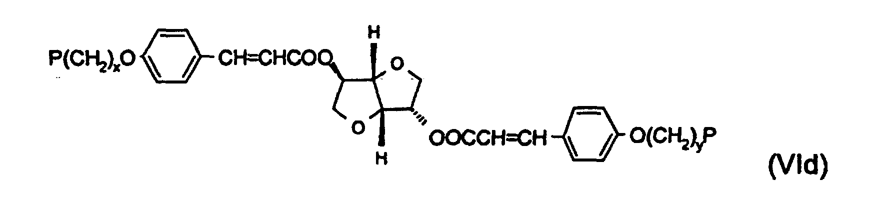 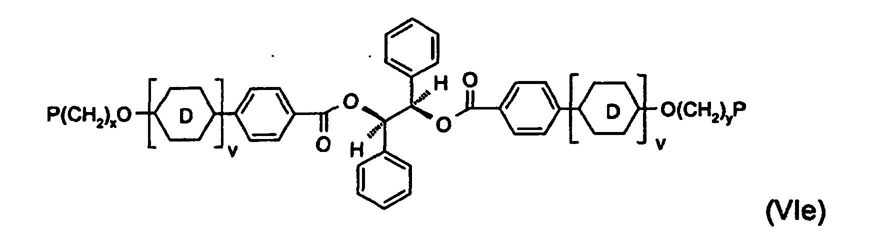 wherein P, x, D, L¹ and L² have one of the meanings given above and y is an integer from 1 to 12 the same as or different from x.

A polymerizable liquid crystal material according to a preferred embodiment of the invention comprises one or more chiral polymerizable mesogenic compounds. Preferably these compounds are selected of formula I, wherein MG, Sp and/or R are comprising a chiral moiety. Particularly preferred are chiral compounds selected of the formula Va to Vm above.

In another preferred embodiment of the present invention the polymerizable liquid crystal material comprises one or more non-polymerizable chiral dopants.

Especially preferred are chiral dopants with a high helical twisting power (HTP), in particular those disclosed in WO 98/00428. Further typically used chiral dopants are e.g. the commercially available S 1011, R 811 or CB 15 (from Merck KGaA, Darmstadt, Germany).

Especially preferred are chiral dopants selected from formula VII 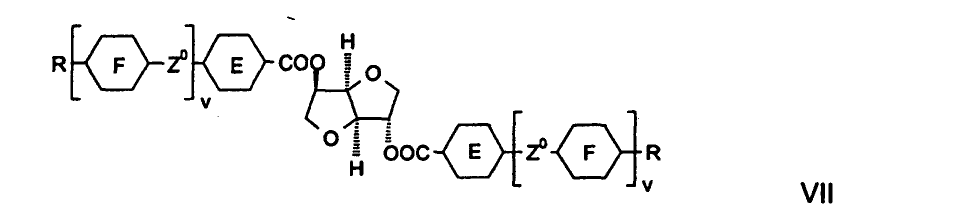 and formula VIII

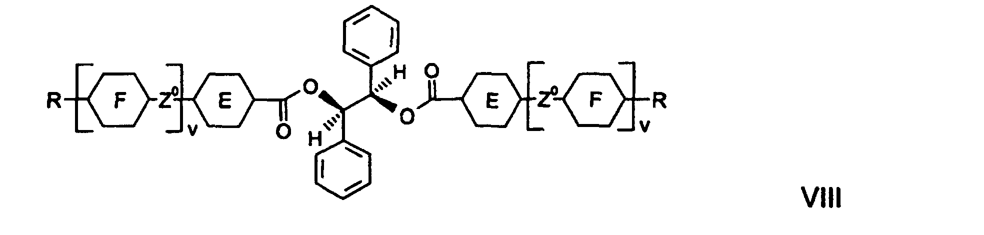

including the respective (R,R), (R,S), (S,R) and (S,S) enantiomers not shown,
wherein E and F are each independently 1,4-phenylene or trans-1,4-cyclohexylene that may be substituted by L as defined above, v is 0 or 1, Z⁰ is -COO-, -OCO-, -CH₂CH₂- or a single bond, and R is alkyl, alkoxy or alkanoyl with 1 to 12 C atoms.

The compounds of formula VII and their synthesis are described in WO 98/00428. The compounds of formula VIII and their synthesis are described in GB 2,328,207.

The above chiral compounds of formula VII and VIII exhibit a very high helical twisting power (HTP), and are therefore particularly useful for the purpose of the present invention.

A first preferred polymerizable liquid crystal material comprises
a) 5 to 80 %, very preferably 10 to 65 % by weight of preferably up to five, very preferably one, two or three monoreactive mesogenic compounds having a polar terminal group,
b) 10 to 90 %, very preferably 25 to 75 % by weight of preferably up to four, very preferably one or two, direactive polymerizable mesogenic compounds,
c) 0.1 to 15 %, very preferably 0.2 to 9 % by weight of preferably up to three, very preferably one or two, non-polymerizable chiral dopants,
d) 0.5 to 10 %, very preferably 1 to 7 % by weight of a polymerization initiator,
e) 0.01 to 6 %, very preferably 0.1 to 3 % by weight of one or more polymerizable surface-active compounds.

A second preferred polymerizable liquid crystal material comprises
a) 0 to 30 %, very preferably 0 to 5 % by weight of preferably up to five, very preferably one, two or three monoreactive mesogenic compounds having a polar terminal group,
b) 90 % or more, very preferably 90 to 99.5 % by weight of preferably up to four, very preferably one or two, direactive polymerizable mesogenic compounds,
c) 0.1 to 15 %, very preferably 0.2 to 9 % by weight of preferably up to three, very preferably one or two, non-polymerizable chiral dopants,
d) 0.5 to 10 %, very preferably 1 to 7 % by weight of a polymerization initiator,
e) 0.01 to 6 %, very preferably 0.1 to 3 % by weight of one or more polymerizable surface-active compounds.

Especially preferred mixtures of the second embodiment are those containing no monoreactive polymerizable compounds of component a).

A third preferred polymerizable liquid crystal material comprises
a) 80 % or more, very preferably 90 to 99.5 % by weight of preferably up to five, very preferably one, two or three monoreactive mesogenic compounds having a polar terminal group,
b) 0 to 20 %, very preferably 0 to 5 % by weight of preferably up to four, very preferably one or two, direactive polymerizable mesogenic compounds,
c) 0.1 to 15 %, very preferably 0.2 to 9 % by weight of preferably up to three, very preferably one or two, non-polymerizable chiral dopants,
d) 0.5 to 10 %, very preferably 1 to 7 % by weight of a polymerization initiator,
e) 0.01 to 6 %, very preferably 0.1 to 3 % by weight of one or more polymerizable surface-active compounds.

Especially preferred mixtures of the third embodiment are those containing no direactive polymerizable compounds of component b).

The compounds of component a) are preferably selected from the above formulae Va and Vb.

The compounds of component b) are preferably selected from the above formulae Vla and Vlb.

The compunds of component c) are preferably selected from the above formulae VII and VIII.

The compounds of component e) are preferably selected from the above formulae IX and X.

According to the inventive method, the polymerizable liquid crystal material is coated onto a substrate and aligned into a uniform orientation. It can then be subsequently polymerized to permanently fix the orientation of the cholesteric material.

As a substrate for example a glass or quarz sheet or a plastic film or sheet can be used. In case of polymerizable matetrials, the substrates can be removed after polymerization or not. In case the substrate is not removed from the polymerized film after polymerization, preferably an isotropic substrate is used.

The substrate may also be a plastic substrate such as for example a film of polyester such as polyethyleneterephthalate (PET), of polyvinylalcohol (PVA), polycarbonate (PC) or triacetylcellulose (TAC), especially preferably a PET film or a TAC film. As a birefringent substrate for example an uniaxially stretched plastic film can be used. For example PET films are commercially available from ICI Corp. under the trade name Melinex.

Especially preferred are glass substrates , in particular covered with rubbed polyimide.

The polymerizable liquid crystal material can also be dissolved in a solvent, preferably in an organic solvent. The solution is then coated onto the substrate, for example by spin-coating or other known techniques, and the solvent is evaporated off. In most cases it is suitable to heat the mixture in order to facilitate the evaporation of the solvent.

In addition to the methods described above, planar alignment in the coated layer of the polymerizable liquid crystal material can further be enhanced by shearing the material, e.g. by means of a doctor blade. It is also possible to apply an alignment layer, for example a layer of rubbed polyimide or sputtered SiOₓ, on top of the substrate, or alternatively to directly rub the substrate, i.e. without applying an additonal alignment layer.

For example rubbing can be achieved by means of a rubbing cloth, such as a velvet cloth, or with a flat bar coated with a rubbing cloth. In a preferred embodiment of the present invention rubbing is achieved by means of a at least one rubbing roller, like e.g. a fast spinning roller that is brushing across the substrate, or by putting the substrate between at least two rollers, wherein in each case at least one of the rollers is optionally covered with a rubbing cloth. In another preferred embodiment of the present invention rubbing is achieved by wrapping the substrate at least partially at a defined angle around a roller that is preferably coated with a rubbing cloth.

Polymerization of the polymerizable liquid crystal material is achieved for example by exposure to heat or actinic radiation. Actinic radiation means irradiation with light, like UV light, IR light or visible light, irradiation with X-rays or gamma rays or irradiation with high energy particles, such as ions or electrons. Preferably polymerization is carried out by UV irradiation.

As a source for actinic radiation for example a single UV lamp or a set of UV lamps can be used. When using a high lamp power the curing time can be reduced. Another possible source for actinic radiation is a laser, like e.g. a UV laser, an IR laser or a visible laser.

The polymerization is carried out in the presence of an initiator absorbing at the wavelength of the actinic radiation. For example, when polymerizing by means of UV light, a photoinitiator can be used that decomposes under UV irradiation to produce free radicals or ions that start the polymerization reaction.

When curing polymerizable mesogens with acrylate or methacrylate groups, preferably a radical photoinitiator is used, when curing polymerizable mesogens vinyl and epoxide groups, preferably a cationic photoinitiator is used.

It is also possible to use a polymerization initiator that decomposes when heated to produce free radicals or ions that start the polymerization.

As a photoinitiator for radical polymerization for example the commercially available Irgacure 651, Irgacure 184, Darocure 1173 or Darocure 4205 (all from Ciba Geigy AG) can be used, whereas in case of cationic photopolymerization the commercially available UVI 6974 (Union Carbide) can be used.

The polymerizable liquid crystal material preferably comprises 0.01 to 10 %, very preferably 0.05 to 5 %, in particular 0.1 to 3 % of a polymerization initiator. UV photoinitiators are preferred, in particular radicalic UV photoinitiators.

The curing time is dependening, inter alia, on the reactivity of the polymerizable mesogenic material, the thickness of the coated layer, the type of polymerization initiator and the power of the UV lamp. The curing time according to the invention is preferably not longer than 10 minutes, particularly preferably not longer than 5 minutes and very particularly preferably shorter than 2 minutes. For mass production short curing times of 3 minutes or less, very preferably of 1 minute or less, in particular of 30 seconds or less, are preferred.

. In addition to polymerization initiators the polymerizable material may also comprise one or more other suitable components such as, for example, catalysts, stabilizers, chain-transfer agents or co-reacting monomers. In particular the addition of stabilizers is preferred in order to prevent undesired spontaneous polymerization of the polymerizable material for example during storage.

As stabilizers in principal all compounds can be used that are known to the skilled in the art for this purpose. These compounds are commercially available in a broad variety. Typical examples for stabilizers are 4-ethoxyphenol or butylated hydroxytoluene (BHT).

Other additives, like e.g. chain transfer agents, can also be added to the polymerizable material in order to modify the physical properties of the inventive polymer film. When adding a chain transfer agent, such as monofunctional thiol compounds like e.g. dodecane thiol or multifunctional thiol compounds like e.g. trimethylpropane tri(3-mercaptopropionate), to the polymerizable material, the length of the free polymer chains and/or the length of the polymer chains between two crosslinks in the inventive polymer film can be controlled. When the amount of the chain transfer agent is increased, the polymer chain length in the obtained polymer film is decreasing.

It is also possible, in order to increase crosslinking of the polymers, to add up to 20% of a non mesogenic compound with two or more polymerizable functional groups to the polymerizable material alternatively or in addition to the di- or multifunctional polymerizable mesogenic compounds to increase crosslinking of the polymer.

Typical examples for difunctional non mesogenic monomers are alkyldiacrylates or alkyldimethacrylates with alkyl groups of 1 to 20 C atoms. Typical examples for non mesogenic monomers with more than two polymerizable groups are trimethylpropanetrimethacrylate or pentaerythritoltetraacrylate.

In another preferred embodiment the polymerizable CLC mixture comprises up to 70%, preferably 3 to 50 % of a non mesogenic compound with one polymerizable functional group. Typical examples for monofunctional non mesogenic monomers are alkylacrylates or alkylmethacrylates.

It is also possible to add, for example, a quantity of up to 20% by weight of a non polymerizable liquid-crystalline compound to adapt the optical properties of the optical retardation film.

In a preferred embodiment of the invention the polymerization of the polymerizable CLC mixture is carried out under an atmosphere of inert gas, preferably under a nitrogen atmosphere.

The selection of suitable polymerization temperatures depends mainly on the clearing point of the polymerizable material and inter alia on the softening point of the substrate. Preferably the polymerization temperature is at least 30 degrees below the clearing temperature of the polymerizable mesogenic mixture.

The inventive mixtures and films can be used for example in optical and electrooptical devices like liquid crystal displays or projection systems, or for decorative or security applications. The polymer films with planar alignment obtained from the inventive mixtures are particularly suitable as optical films for optical devices like for example polarizers, compensators, beam splitters, reflective films, colour filters, decorative or security markings, coloured images, holographic elements, hot stamping foils, and for the preparation of liquid crystal pigments for decorative or security applications, like false-proof markings or security threads on banknotes or other documents of value.

Polymerizable cholesteric liquid crystal mixtures and polymer films obtained thereof are particular suitable for applications where the film is part of a composite liquid crystal cell, such as alignment layers or colour filters. For example, nematic mixtures are especially suitable as alignment layers, cholesteric mixtures are especially suitable as colour filters.

Without further elaboration, it is believed that one skilled in the art can, using the preceding description, utilize the present invention to ist fullest extent. The following examples are, therefore, to be construed as merely illustrative and not limitative of the remainder of the disclosure in any way whatsoever.

In the foregoing and in the following examples, unless otherwise indicated, all temperatures are set forth uncorrected in degrees Celsius and all parts and percentages are by weight.

The following abbreviations are used to illustrate the liquid crystalline phase behaviour of the compounds: K = crystalline; N = nematic; S = smectic; Ch = cholesteric; I = isotropic. The numbers between the symbols indicate the phase transition temperatures in °C.

### Example 1

Three polymerizable cholesteric liquid crystal mixtures A, B and C were formulated as shown in table 1. Mixture A contains a polymerizable surfactant, mixture B a non-polymerizable surfactant and mixture C does not contain a surfactant.

**Table 1:**

| Composition of polymerizable cholesteric mixtures | | | |
|---|---|---|---|
| | A | B | C |
| Compound (1) | 50.00 % | 50.00 % | 50.00 % |
| compound (2) | 12.50 % | 12.50 % | 12.50% |
| compound (3) | 9.02 % | 9.02 % | 9.02% |
| compound (4) | 21.95 % | 21.95% | 21.95% |
| compound (5) | 4.50 % | 4.50 % | 4.50% |
| 4-Methoxyphenol | 0.03 % | 0.03 % | 0.03 % |
| TPO | 1.00 % | 1.00 % | 1.00% |
| Fluorad FX-13® | 1.00 % | 0.00 % | 0.00% |
| FC171® | 0.00 % | 1.00 % | 0.00% |

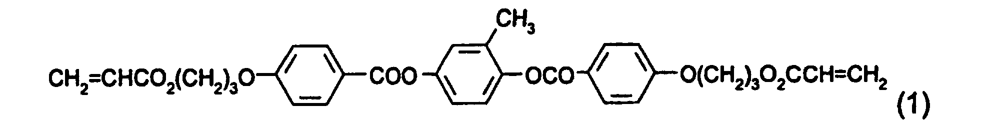

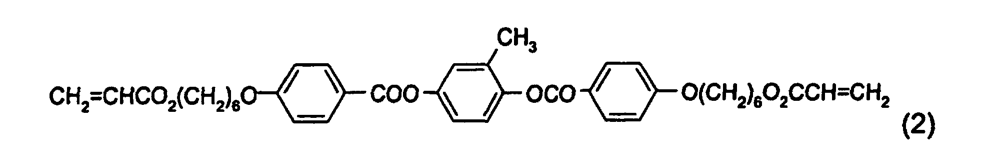

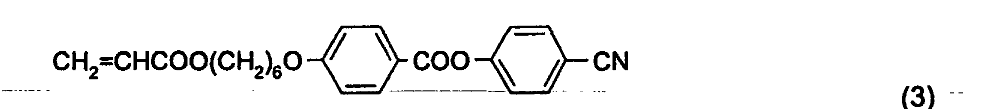

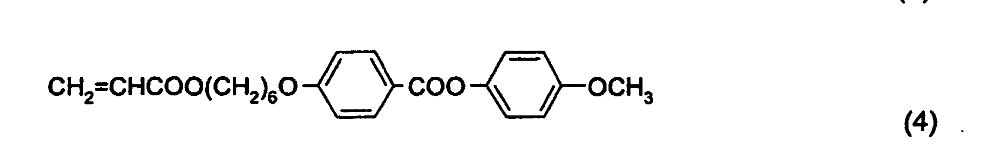

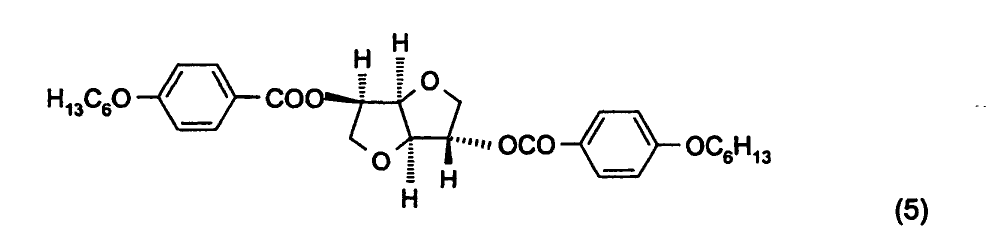

Compounds (1) and (2) can be prepared in analogy to the methods described in WO 93/22397. Compounds (3) and (4) can be prepared in analogy to the methods described in D.J.Broer et al., Makromol.Chem. **190**, 3201-3215 (1989). The preparation of the chiral dopant (5) is described in WO 98/00428. FX-13® is a polymerizable surfactant of formula IX above, which is commercially available from 3M (St. Paul, Minnesota, USA). TPO (2,4,6-trimethylbenzoyl-diphenylphosphine oxide), Trademark Lucirin® TPO, is a commercially available photoinitiator from BASF (Ludwigshafen, Germany). 4-Methoxyphenol is a commercially available stabilizer. FC171 is a non-polymerizable fluorocarbon surfactant of the formula CₙF₂ₙ₊₁SO₂N(C₂H₅)(CH₂CH₂O)ₓCH₃,
wherein n is an integer from 4 to 12 and x is an integer from 5 to 15, which is commercially available from 3M (St. Paul, Minnesota, USA).

### Preparation of films

A 50 wt. % solution of each of the mixtures A, B and C was prepared in xylene. The solution was filtered through a 0.2 µm PTFE membrane filter prior to use. A first layer of mixture A and B respectively was spin coated onto a rubbed polyimide/ glass substrate at 3,000 RPM for 30s. The film was annealed at 70 °C for 30s and photo-polymerized at 70 °C using 19.5 mWcm⁻² UV-A radiation for 60s in a nitrogen atmosphere. Stacked films were then prepared by spin coating a second layer of mixture C directly onto the first layers of mixture A and B, respectively. The second layer was annealed at 70 °C for 30s and photo-polymerized at ambient temperature using 19.5 mWcm⁻² UV-A radiation for 60s in a nitrogen atmosphere.

### Surface energy measurements

The surface energy of the mono- and bilayer films produced was determined from contact angle measurements taken using a Kruss DSA10 instrument linked to a PC. The analysis was performed using the specialist software supplied with the instrument. Contact angles of water (BDH, HPLC grade), ethylene glycol (Aldrich 99+% Spectrophotometric grade) and diiodomethane (Aldrich 99%) were measured to determine the surface energy of the films. The solvents were used as supplied. All measurements were taken at 22 °C. The contact angles used are an average of at least 4 measurements fitted according to Young-LaPlace. The Surface energies were obtained using Owen-Wendt-Rabel-Kaelbe (OWRK) theory. The data is collected in Table 2.

**Table 2:**

| Contact angle measurements and surface energy γ for mono-and bilayer polymer films of mixtures A, B and C | | | | | | |
|---|---|---|---|---|---|---|
| Stack | Water/ ° | Ethylene glycol/° | Diiodomethane/ ° | γ / mNm⁻¹ | γ^{d}/ mNm⁻¹ | γ^{p}/ mNm⁻¹ |
| A | 101.78±1.82 | 77.97±1.04 | 64.04±1.32 | 25.16 | 24.65 | 0.51 |
| B | 78.67±0.90 | 57.23±1.09 | 37.72±1.89 | 39.45 | 35.67 | 3.78 |
| C | 71.60±1.33 | 54.51±0.56 | 41.11±1.55 | 40.23 | 33.24 | 6.98 |
| A + C | 70.79±1.06 | 54.07±1.59 | 33.49±1.48 | 42.30 | 35.92 | 6.38 |
| B + C | 80.84±1.39 | 59.96±1.95 | 44.48±1.41 | 36.61 | 32.87 | 3.74 |

The superscript d and p refers to dispersive and polar components of the surface energy.

Analysis of the surface energy data for the films of mixtures A, B and C reveals that the addition of a surfactant to the liquid crystal mixture reduces the surface energy of the film. The addition of the polymerizable surfactant FX13 is more effective than the non-polymerizable surfactant FC171 at reducing the overall surface energy of the polymerized film. Analysis of the contact angle measurements by OWRK theory allows the dispersive and polar components of the surface energy to be determined (Table 2). These results show that the surface energy of the film containing the polymerizable surfactant FX13 (A) is predominately dispersive in nature with only a small polar contribution. The surface energy of the film containing no surfactant (C) exhibits the greatest surface energy with an increase in magnitude of both the polar and dispersive components. The dispersive component of the surface energy of the film containing the non-polymerizable surfactant FC171 (B) is similar to that of the neat liquid crystal film (C) whereas the magnitude of its polar component is significantly reduced compared to (C). Therefore, examination of both the dispersive and polar contributions of the surface energies of the films allows the migration of surfactant through the stacked layers to be detected. Stacked films have been produced by the addition of a second layer of the liquid crystal mixture without surfactant (C) to a film of both (A) and (B). The dispersive and polar contributions to the surface energy for the stacked film of (A) + (C) are very similar to those of just the film of the liquid crystal mixture without surfactant (C), suggesting that the polymerizable surfactant does not migrate from the lower to the upper layer or that its migration has been significantly reduced. The dispersive contribution for the films (B) and (C) are similar in magnitude. Hence, for this example, the magnitude of the dispersive contribution to the surface energy for the stack of (B) + (C) is not suitable to use as an indication of surfactant migration. However, the polar contributions in these films are sufficiently different. The polar contribution to the surface energy for the stacked film of (B) + (C) is similar to the film containing the non-polymerizable surfactant FC171 (B), suggesting that FC171 has migrated from the first layer into the second layer. Hence the use of a polymerizable surfactant has been demonstrated to significantly reduce surfactant migration in a stack of films.

### Example 2

The following polymerizable nematic mixture was formulated

| | |
|---|---|
| Compound (1) | 99.0 % |
| Fluorad FX-13® | 0.5 % |
| Irgacure 651® | 0.5% |

Irgacure 651® is a commercially available photoinitiator from Ciba AG (Basel, Switzerland).

### Example 3

The following polymerizable cholesteric mixture was formulated

| | |
|---|---|
| Compound (1) | 92.0 % |
| Paliocolor LC756® | 7.0 % |
| Fluorad FX-13® | 0.5 % |
| Irgacure 651® | 0.5 % |

Paliocolor 756® is a direactive polymerizable chiral compound commercially available from BASF AG (Ludwigshafen, Germany).

### Example 4

The following polymerizable nematic mixture was formulated

| | |
|---|---|
| Compound (3) | 25.0 % |
| compound (4) | 25.0 % |
| compound (6) | 49.0 % |
| Fluorad FX-13® | 0.5 % |
| Irgacure 651® | 0.5 % |

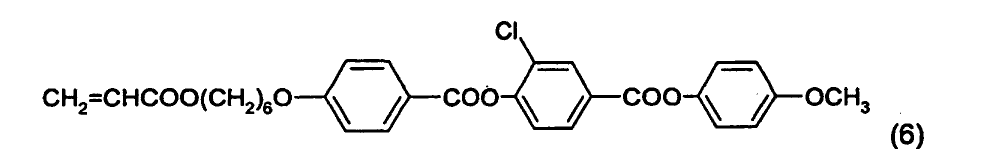

compound (6) can be prepared in analogy to the methods described in WO 93/22397.

### Example 5

The following polymerizable cholesteric mixture was formulated

| | |
|---|---|
| Compound (3) | 25.0 % |
| compound (4) | 25.0 % |
| compound (5) | 5.0 % |
| compound (6) | 44.0 % |
| Fluorad FX-13® | 0.5 % |
| Irgacure 651® | 0.5 % |

The preceding examples can be repeated with similar success by substituting the generically or specifically described reactants and/or operating conditions of this invention for those used in the preceding examples.

## Claims

1. Polymerizable liquid crystal material, **characterized in that** it comprises at least one polymerizable surface-active compound selected from fluorocarbon surfactants.

2. Polymerizable liquid crystal material according to claim 1, **characterized in that** it comprises less than 20 % by weight of polymerizable mesogenic compounds with a non-polar terminal group.

3. Polymerizable liquid crystal material according to at least one of claims 1 and 2, **characterized in that** it comprises 0.01 to 15 % by weight of polymerizable surface-active compounds.

4. Polymerizable liquid crystal material according to at least one of claims 1 to 3, **characterized in that** it comprises one or more chiral compounds.

5. Polymerizable liquid crystal material according to at least one of claims 1 to 4, **characterized in that** it comprises one or more polymerizable mesogenic compounds selected of formula I
P-(Sp-X)ₙ-MG-R I
wherein
P is a polymerzable group,
Sp is a spacer group having 1 to 25 C atoms,
X is -O-, -S-, -CO-, -COO-, -OCO-, -CO-NH-, -NH-CO-, - CH₂CH₂-, -OCH₂-, -CH₂O-, -SCH₂-, -CH₂S-, -CH=CH-, - CH=CH-COO-, -OCO-CH=CH-, -C≡C-, or a single bond,
n is 0 or 1,
MG is a mesogenic group, and
R is H, CN, NO₂, halogen or a straight-chain or branched alkyl radical with up to 25 C atoms which may be unsubstituted, mono- or polysubstituted by halogen or CN, it being also possible for one or more non-adjacent CH₂ groups to be replaced, in each case independently from one another, by -O-, -S-, -NH-, -N(CH₃)-, -CO-, -COO-, -OCO-, -OCO-O-, -S-CO-, -CO-S- or -C≡C- in such a manner that oxygen atoms are not linked directly to one another, or alternatively R is denoting P-(Sp-X)ₙ-.

6. Polymerizable liquid crystal material according to at least one of claims 1 to 5, **characterized in that** the polymerizable surface-active compounds comprise one or two polymerizable groups selected from acryl, methacryl, epoxy, vinyl, vinyloxy, styrene and propenyl ether groups.

7. Polymerizable liquid crystal material according to claim 5 or 6, **characterized in that** the mesogenic group is selected of formula II
- A¹-Z¹-(A²-Z²-)ₘ-A³- II
wherein
Z¹ and Z² are each independently -COO-, -OCO-, -CH₂CH₂-, -OCH₂-, -CH₂O-, -CN=CH-, -CH=CH-COO-, -OCO-CH=CH-, -C≡C-, or a single bond,
A¹, A² and A³ are each independently 1,4-phenylene in which, in addition, one or more CH groups may be replaced by N, 1,4-cyclohexylene in which, in addition, one or two non-adjacent CH₂ groups may be replaced by O and/or S, 1,4-cyclohexenylene, 1,4-bicyclo(2,2,2)octylene, piperidine-1,4-diyl, naphthalene-2,6-diyl, decahydronaphthalene-2,6-diyl, or 1,2,3,4-tetrahydro-naphthalene-2,6-diyl, it being possible for all these groups to be unsubstituted, mono- or polysubstituted with F,Cl, OH, CN, NO₂ or alkyl, alkoxy or alkanoyl groups having 1 to 7 C atoms wherein one or more H atoms may be substituted by F or Cl, and
m is 0, 1 or 2.

8. Polymerizable liquid crystal material according to at least one of claims 5 to 7, **characterized in that** the mesogenic group is selected of the following formulae and their mirror images 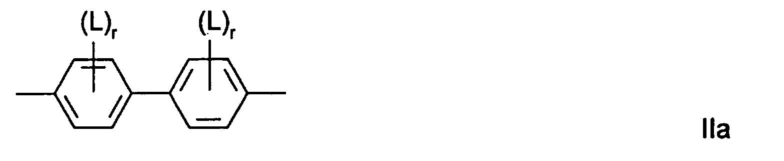 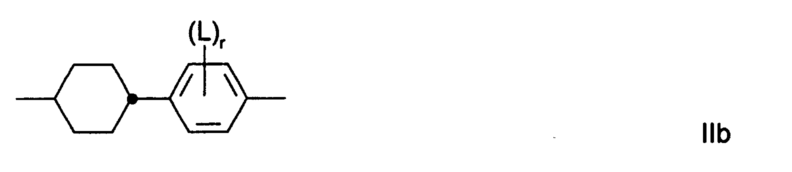 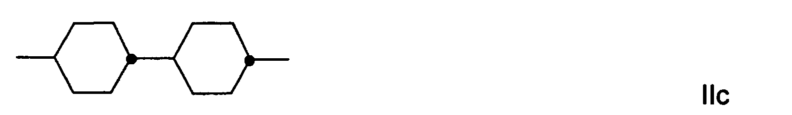 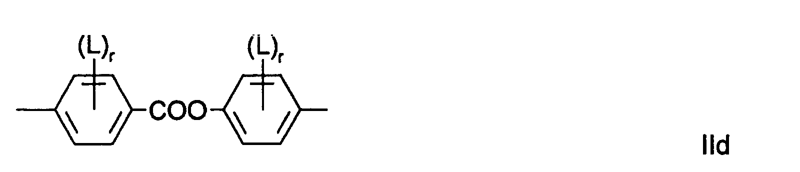 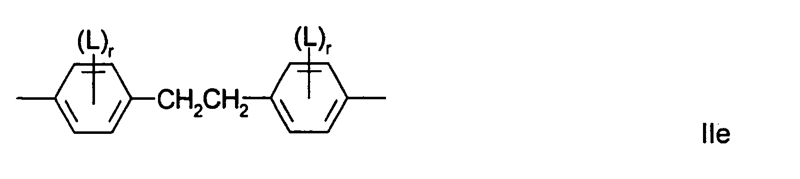 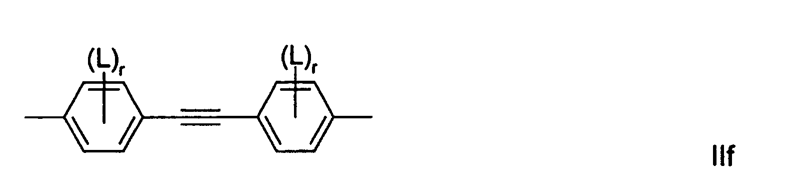 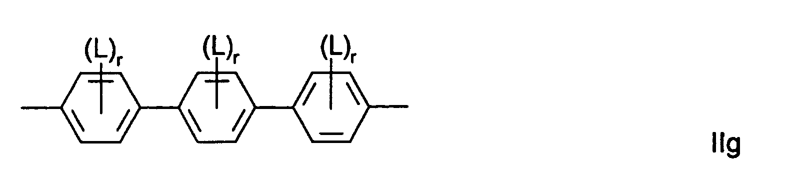 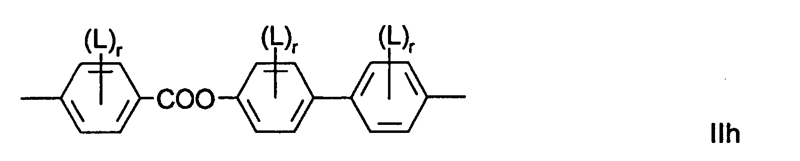 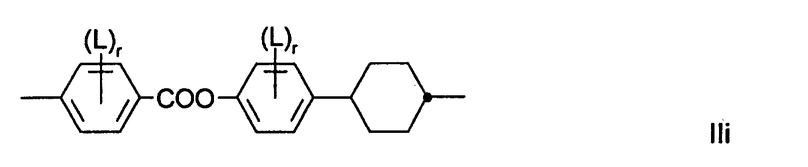 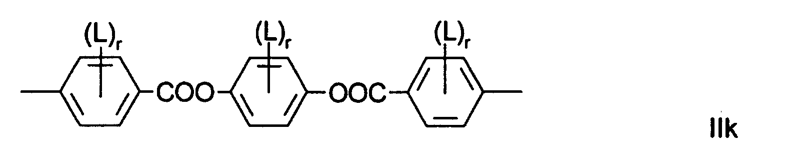 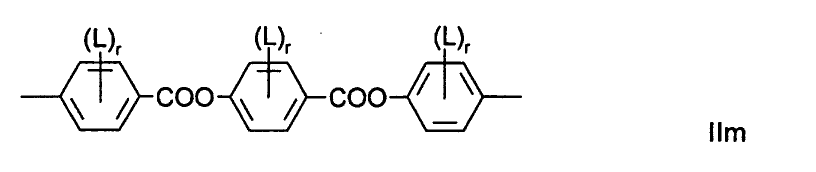 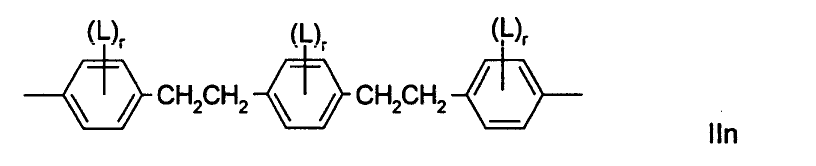 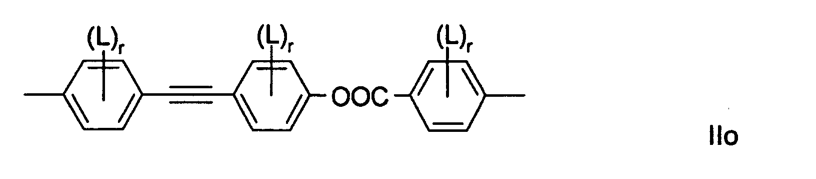 wherein r is 0, 1 or 2 and L is F, Cl, CN, OH, NO₂ or an optionally fluorinated or chlorinated alkyl, alkoxy or alkanoyl group with 1 to 7 C atoms.

9. Polymerizable liquid crystal material according to at least one of claims 1 to 8, **characterized in that** the polymerizable surface-active compounds are selected from the following formulae
CₙF₂ₙ₊₁SO₂N(C₂H₅)CH₂CH₂OCOCH=CH₂ IX
CₙF₂ₙ₊₁SO₂N(C₂H₅)CH₂CH₂OCOC(CH₃)=CH₂ X
wherein n is an integer from 4 to 8, and the perfluoroalkyl group may be linear or branched.

10. Polymerizable liquid crystal material according to at least one of claims 1 to 9, **characterized in that** it essentially consists of
a) 5 to 80 % by weight of monoreactive mesogenic compounds having a polar terminal group,
b) 10 to 90 % by weight of direactive polymerizable mesogenic compounds,
c) 0.1 to 15 % by weight of non-polymerizable chiral dopants,
d) 0.5 to 10 % by weight of a polymerization initiator,
e) 0.01 to 6 % by weight of one or more polymerizable surface-active compounds.

11. Polymerizable liquid crystal material according to at least one of claims 1 to 9, **characterized in that** it essentially consists of
a) 0 to 30 % by weight of monoreactive mesogenic compounds having a polar terminal group,
b) 90 % or more by weight of direactive polymerizable mesogenic compounds,
c) 0.1 to 15 % by weight of non-polymerizable chiral dopants,
d) 0.5 to 10 % by weight of a polymerization initiator,
e) 0.01 to 6 % by weight of one or more polymerizable surface-active compounds.

12. Polymerizable liquid crystal material according to at least one of claims 1 to 9, **characterized in that** it essentially consists of
a) 80 % or more by weight of monoreactive mesogenic compounds having a polar terminal group,
b) 0 to 20 % by weight of direactive polymerizable mesogenic compounds,
c) 0.1 to 15 % by weight of non-polymerizable chiral dopants,
d) 0.5 to 10 % by weight of a polymerization initiator,
e) 0.01 to 6 % by weight of one or more polymerizable surface-active compounds.

13. Method of preparing an anisotropic polymer film with planar alignment with a low tilt angle, by applying a polymerizable liquid crystal material according to at least one of claims 1 to 12 onto a substrate, aligning the material into planar orientation and polymerizing the material.

14. Anisotropic polymer film with planar alignment obtained from a polymerizable liquid crystal mixture according to at least one of claims 1 to 12.

15. Anisotropic polymer film according to claim 14, **characterized in that** the tilt angle is less than 3 degrees.

16. Anisotropic polymer film according to at least one of claims 14 and 15, **characterized in that** it exhibits a helically twisted molecular orientation.

17. Use of a polymerizable liquid crystal material according to at least one of claims 1 to 12 or a polymer film according to at least one of claims 14 to 16 in optical devices, decorative or security use, like for example in polarizers, compensators, beam splitters, alignment layers, reflective films, colour filters, holographic elements, hot stamping foils, coloured images, decorative or security markings, and for the preparation of liquid crystal pigments for decorative or security applications.

18. Colour filter comprising a polymerizable liquid crystal mixture according to at least one of claims 1 to 12 or at least one polymer film according to at least one of claims 14 to 16.

19. Alignment layer comprising a polymerizable liquid crystal mixture according to at least one of claim 1 to 12 or at least one polymer film according to at least one of claims 14 to 16.

## Patentansprüche

1. Polymerisierbares Flüssigkristallmaterial, **dadurch gekennzeichnet, dass** es mindestens eine polymerisierbare oberflächenaktive Verbindung ausgewählt aus Fluorcarbontensiden enthält.

2. Polymerisierbares Flüssigkristallmaterial nach Anspruch 1, **dadurch gekennzeichnet, dass** es weniger als 20 Gew.-% an polymerisierbaren mesogenen Verbindungen mit einer unpolaren Endgruppe enthält.

3. Polymerisierbares Flüssigkristallmaterial nach mindestens einem der Ansprüche 1 und 2, **dadurch gekennzeichnet, dass** es 0,01 bis 15 Gew.-% an polymerisierbaren oberflächenaktiven Verbindungen enthält.

4. Polymerisierbares Flüssigkristallmaterial nach mindestens einem der Ansprüche 1 bis 3, **dadurch gekennzeichnet, dass** es eine oder mehrere chirale Verbindungen enthält.

5. Polymerisierbares Flüssigkristallmaterial nach mindestens einem der Ansprüche 1 bis 4, **dadurch gekennzeichnet, dass** es eine oder mehrere polymerisierbare mesogene Verbindungen ausgewählt aus Formel I
P-(Sp-X)ₙ-MG-R I
enthält, worin
P eine polymerisierbare Gruppe bedeutet,
Sp eine Spacergruppe mit 1 bis 25 C-Atomen bedeutet,
X -O-, -S-, -CO-, -COO-, -OCO-, -CO-NH-, -NH-CO-, - CH₂CH₂-, -OCH₂-, -CH₂O-, -SCH₂-, -CH₂S-, -CH=CH-, - CH=CH-COO-, -OCO-CH=CH-, -C≡C- oder eine Einfachbindung bedeutet,
n 0 oder 1 bedeutet,
MG eine mesogene Gruppe bedeutet und
R H, CN, NO₂, Halogen oder einen geradkettigen oder verzweigten Alkylrest mit bis zu 25 C-Atomen bedeutet, der unsubstituiert oder ein- oder mehrfach durch Halogen oder CN substituiert sein kann, wobei auch eine oder mehrere nicht benachbarte CH₂-Gruppen jeweils unabhängig voneinander durch -O-, -S-, -NH-, -N(CH₃)-, -CO-, -COO-, - OCO-, -OCO-O-, -S-CO-, -CO-S- oder -C≡C- so ersetzt sein können, dass Sauerstoffatome nicht direkt miteinander verknüpft sind, oder R auch P-(Sp-X)ₙ- bedeutet.

6. Polymerisierbares Flüssigkristallmaterial nach mindestens einem der Ansprüche 1 bis 5, **dadurch gekennzeichnet, dass** die polymerisierbaren oberflächenaktiven Verbindungen eine oder zwei polymerisierbare Gruppen ausgewählt aus Acryl-, Methacryl-, Epoxy-, Vinyl-, Vinyloxy-, Styrol- und Propenylethergruppen enthalten.

7. Polymerisierbares Flüssigkristallmaterial nach Anspruch 5 oder 6, **dadurch gekennzeichnet, dass** die mesogene Gruppe aus der Formel II
-A¹-Z¹-(A²-Z²)ₘ-A³- II
ausgewählt ist, worin
Z¹ und Z² jeweils unabhängig -COO-, -OCO-, -CH₂CH₂-, - OCH₂-, -CH₂O-, -CH=CH-, -CH=CH-COO-, OCO-CH=CH-, -C=C- oder eine Einfachbindung bedeuten,
A¹, A² und A³ jeweils unabhängig 1,4-Phenylen, in dem zusätzlich eine oder mehrere CH-Gruppen durch N ersetzt sein können, 1,4-Cyclohexylen, in dem zusätzlich eine oder zwei nicht benachbarte CH₂-Gruppen durch O und/oder S ersetzt sein können, 1,4-Cyclohexenylen, 1,4-Bicyclo-(2,2,2)-octylen, Piperidin-1,4-diyl, Naphthalin-2,6-diyl, Decahydronaphthalin-2,6-diyl oder 1,2,3,4-Tetrahydronaphthalin-2,6-diyl bedeuten, wobei alle diese Gruppen unsubstituiert oder ein- oder mehrfach durch F, Cl, OH, CN, NO₂ oder Alkyl-, Alkoxy- oder Alkanoylgruppen mit 1 bis 7 C-Atomen substituiert sein können, worin ein oder mehrere H-Atome durch F oder Cl substituiert sein können, und
m 0, 1 oder 2 bedeutet.

8. Polymerisierbares Flüssigkristallmaterial nach mindestens einem der Ansprüche 5 bis 7, **dadurch gekennzeichnet, dass** die mesogene Gruppe aus den folgenden Formeln und deren Spiegelbildern 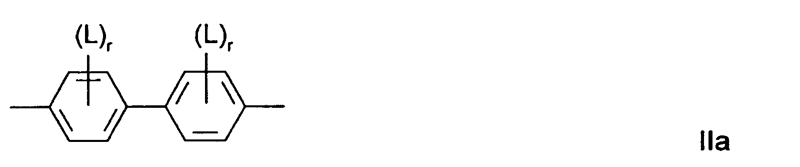 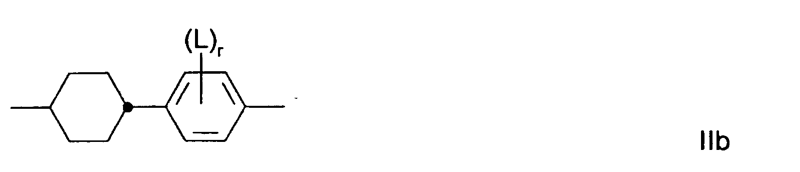 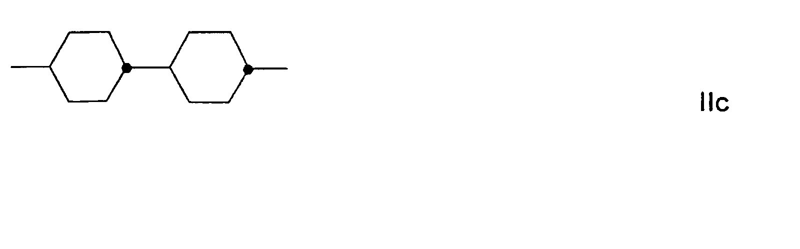 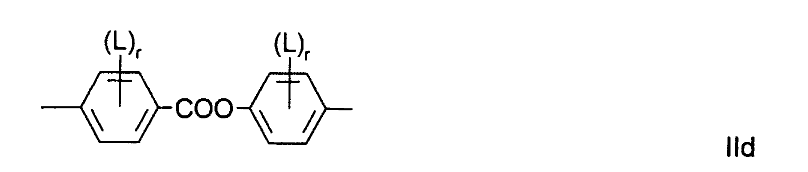 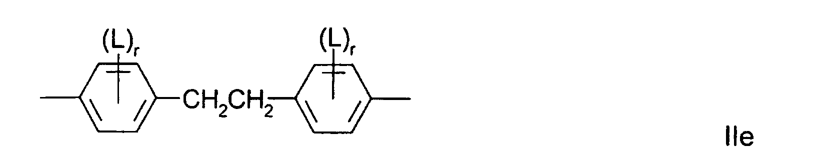 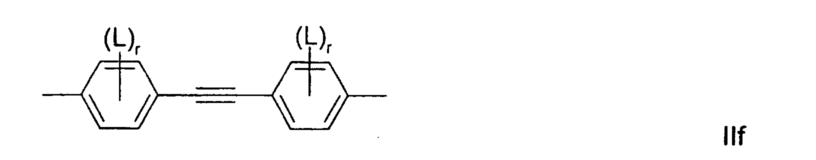 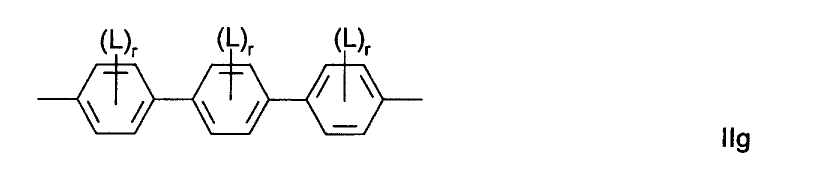 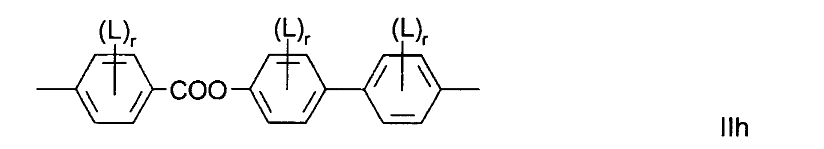 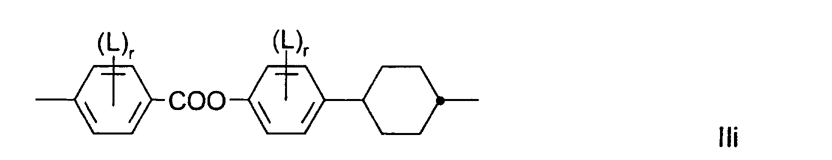 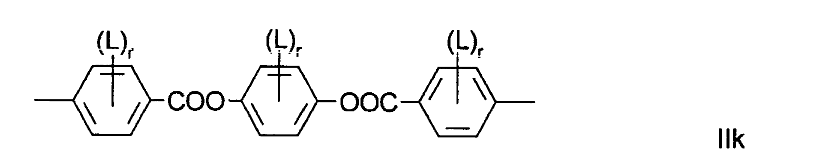 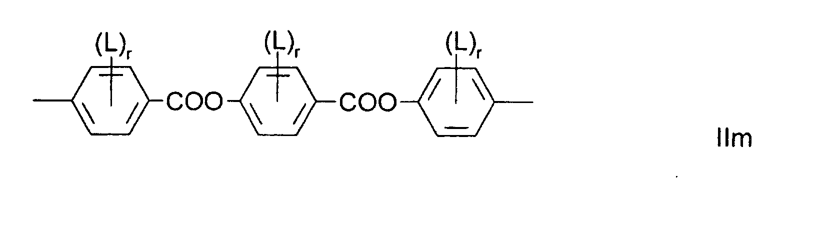 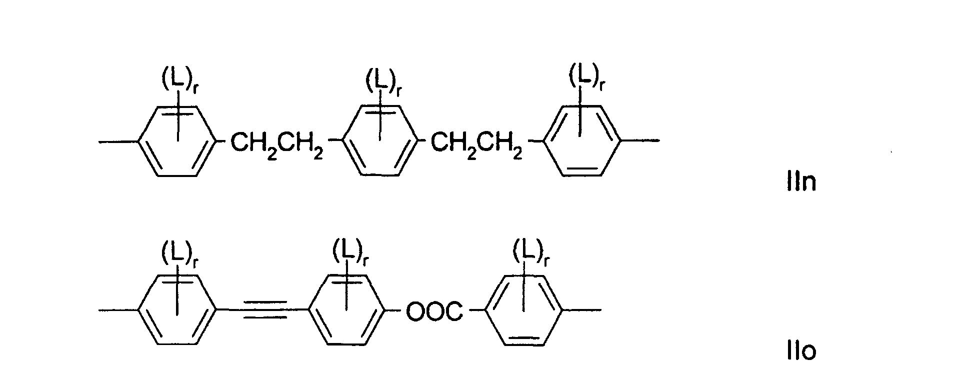 ausgewählt ist, worin r 0, 1 oder 2 und L F, Cl, CN, OH, NO₂ oder eine gegebenenfalls fluorierte oder chlorierte Alkyl-, Alkoxy- oder Alkanoylgruppe mit 1 bis 7 C-Atomen bedeutet.

9. Polymerisierbares Flüssigkristallmaterial nach mindestens einem der Ansprüche 1 bis 8, **dadurch gekennzeichnet, dass** die polymerisierbaren oberflächenaktiven Verbindungen aus den folgenden Formeln
CₙF₂ₙ₊₁SO₂N(C₂H₅)CH₂CH₂OCOCH=CH₂ IX
CₙF₂ₙ₊₁SO₂N(C₂H₅)CH₂CH₂OCOC(CH₃)=CH₂ X
ausgewählt sind, worin n eine ganze Zahl von 4 bis 8 bedeutet und die Perfluoralkylgruppe linear oder verzweigt sein kann.

10. Polymerisierbares Flüssigkristallmaterial nach mindestens einem der Ansprüche 1 bis 9, **dadurch gekennzeichnet, dass** es im Wesentlichen besteht aus
a) 5 bis 80 Gew.-% an monoreaktiven mesogenen Verbindungen mit einer polaren Endgruppe,
b) 10 bis 90 Gew.-% an direaktiven polymerisierbaren mesogenen Verbindungen,
c) 0,1 bis 15 Gew.-% an nicht polymerisierbaren chiralen Dotierstoffen,
d) 0,5 bis 10 Gew.-% eines Polymerisationsinitiators,
e) 0,01 bis 6 Gew.-% einer oder mehrerer polymerisierbarer oberflächenaktiver Verbindungen.

11. Polymerisierbares Flüssigkristallmaterial nach mindestens einem der Ansprüche 1 bis 9, **dadurch gekennzeichnet, dass** es im Wesentlichen besteht aus
a) 0 bis 30 Gew.-% an monoreaktiven mesogenen Verbindungen mit einer polaren Endgruppe,
b) 90 Gew.-% oder mehr an bis zu vier direaktiven polymerisierbaren mesogenen Verbindungen,
c) 0,1 bis 15 Gew.-% an nicht polymerisierbaren chiralen Dotierstoffen,
d) 0,5 bis 10 Gew.-% eines Polymerisationsinitiators,
e) 0,01 bis 6 Gew.-% einer oder mehrerer polymerisierbarer oberflächenaktiver Verbindungen.

12. Polymerisierbares Flüssigkristallmaterial nach mindestens einem der Ansprüche 1 bis 9, **dadurch gekennzeichnet, dass** es im Wesentlichen besteht aus
a) 80 Gew.-% oder mehr an monoreaktiven mesogenen Verbindungen mit einer polaren Endgruppe,
b) 0 bis 20 Gew.-% an direaktiven polymerisierbaren mesogenen Verbindungen,
c) 0,1 bis 15 Gew.-% an nicht polymerisierbaren chiralen Dotierstoffen,
d) 0,5 bis 10 Gew.-% eines Polymerisationsinitiators,
e) 0,01 bis 6 Gew.-% einer oder mehrerer polymerisierbarer oberflächenaktiver Verbindungen.

13. Verfahren zur Herstellung einer anisotropen Polymerfolie mit planarer Orientierung mit geringem Neigungswinkel durch Aufbringen eines polymerisierbaren Flüssigkristallmaterials nach mindestens einem der Ansprüche 1 bis 12 auf ein Substrat, Orientieren des Materials in eine planare Ausrichtung und Polymerisieren des Materials.

14. Anisotrope Polymerfolie mit planarer Orientierung, erhalten aus einer polymerisierbaren Flüssigkristallmischung nach mindestens einem der Ansprüche 1 bis 12.

15. Anisotrope Polymerfolie nach Anspruch 14, **dadurch gekennzeichnet, dass** der Neigungswinkel weniger als 3 Grad beträgt.

16. Anisotrope Polymerfolie nach mindestens einem der Ansprüche 14 und 15, **dadurch gekennzeichnet, dass** sie eine helikal verdrillte Molekülausrichtung aufweist.

17. Verwendung eines polymerisierbaren Flüssigkristallmaterials nach mindestens einem der Ansprüche 1 bis 12 oder einer Polymerfolie nach mindestens einem der Ansprüche 14 bis 16 in optischen Geräten, dekorativen oder Sicherheitsnutzungen, wie z.B. in Polarisatoren, Kompensatoren, Strahlteilern, Orientierungsschichten, reflektierenden Folien, Farbfiltern, holographischen Elementen, Heißprägefolien, farbigen Abbildungen, dekorativen oder Sicherheitsmarkierungen, und zur Herstellung von Flüssigkristallpigmenten für dekorative oder Sicherheitsanwendungen.

18. Farbfilter enthaltend eine polymerisierbare Flüssigkristallmischung nach mindestens einem der Ansprüche 1 bis 12 oder mindestens eine Polymerfolie nach mindestens einem der Ansprüche 14 bis 16.

19. Orientierungsschicht enthaltend eine polymerisierbare Flüssigkristallmischung nach mindestens einem der Ansprüche 1 bis 12 oder mindestens eine Polymerfolie nach mindestens einem der Ansprüche 14 bis 16

## Revendications

1. Matériau de cristaux liquides polymérisable, **caractérisé en ce qu'**il comprend au moins un composé tensio-actif polymérisable choisi parmi des agents surfactants fluorocarbonés.

2. Matériau de cristaux liquides polymérisable selon la revendication 1, **caractérisé en ce qu'**il comprend moins de 20% en poids de composés mésogènes polymérisables avec un groupe terminal non polaire.

3. Matériau de cristaux liquides polymérisable selon au moins l'une des revendications 1 et 2, **caractérisé en ce qu'**il comprend de 0,01% à 15% en poids de composés tensio-actifs polymérisables.

4. Matériau de cristaux liquides polymérisable selon au moins l'une des revendications 1 à 3, **caractérisé en ce qu'**il comprend un ou plusieurs composés chiraux.

5. Matériau de cristaux liquides polymérisable selon au moins l'une des revendications 1 à 4, **caractérisé en ce qu'**il comprend un ou plusieurs composés mésogènes polymérisables choisis à partir de la formule I
P-(Sp-X)ₙ-MG-R I
dans laquelle
P est un groupe polymérisable ;
Sp est un groupe d'espaceur comportant de 1 à 25 atomes C ;
X est -O-, -S-, -CO-, -COO-, -OCO-, -CO-NH-, -NH-CO-, -CH₂CH₂-, -OCH₂-, -CH₂O-, -SCH₂-, -CH₂S-, -CH=CH-, - CH=CH-COO-, -OCO-CH=CH-, -C≡C-, ou une liaison simple ;
n vaut 0 ou 1
MG est un groupe mésogène ; et
R est H, CN, NO₂, un halogène ou un radical alkyle à chaîne rectiligne ou dérivé avec jusqu'à 25 atomes C qui peut être non substitué, mono- ou polysubstitué par halogène ou CN, étant entendu qu'il est également possible qu'un ou plusieurs groupes CH₂ non adjacents soient remplacés, dans chaque cas de manière indépendante les uns des autres, par -O-, -S-, - NH-, -N(CH₃)-, -CO-, -COO-, -OCO-, -OCO-O-, -S-CO-, -CO-S- ou -C≡C- de telle sorte que des atomes d'oxygène ne soient pas liés directement les uns aux autres ou, à titre d'alternative, R représente P-(Sp-X)ₙ

6. Matériau de cristaux liquides polymérisable selon au moins l'une des revendications 1 à 5, **caractérisé en ce que** les composés tensio-actifs polymérisables comprennent un ou deux groupes polymérisables choisis parmi acryle, méthacryle, époxy, vinyle, vinyloxy, styrène et des groupes éther propénylique

7. Matériau de cristaux liquides polymérisable selon la revendication 5 ou 6, **caractérisé en ce que** le groupe mésogène est choisi à partir de la formule II
-A¹-Z¹-(A²-Z²-)ₘ-R³- II
dans laquelle
Z¹ et Z² sont chacun de manière indépendante -COO-, - OCO-, -CH₂CH₂-, -OCH₂-, -CH₂O-, -CH=CH-, - CH=CH-COO-, -OCO-CH=CH-, -C≡C-, ou une liaison simple ;
A¹, A² et A³ sont chacun de manière indépendante 1,4-phénylène où, en plus, un ou plusieurs groupes CH peuvent être remplacés par N, 1,4-cyclohexylène où, en plus, un ou deux groupes CH₂ non adjacents peuvent être remplacés par O et/ou S, 1,4-cyclohexénylène, 1,4-bicyclo(2,2,2)octylène, pipéridine-1,4-diyl, naphtalène-2,6-diyl, décahydronaphthalène-2,6-diyl ou 1,2,3,4-tétra-hydronaphtalène-2,6-diyl, étant entendu qu'il est possible que tous ces groupes soient non substitués, mono ou polysubstitués avec F, Cl, OH, CN, NO₂ ou des groupes alkyle, alkoxy ou alkanoyle comportant de 1 à 7 atomes C où un ou plusieurs atomes H peuvent être substitués par F ou Cl, et
m vaut 0, 1 ou 2.

8. Matériau de cristaux liquides polymérisable selon au moins l'une des revendications 5 à 7, **caractérisé en ce que** le groupe mésogène est choisi à partir des formules qui suivent et de leurs images miroirs 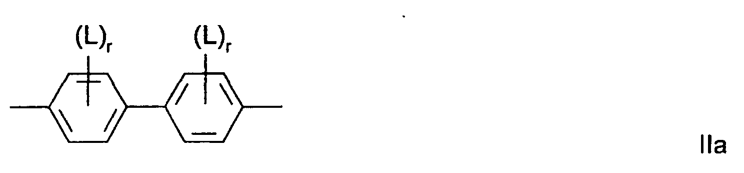 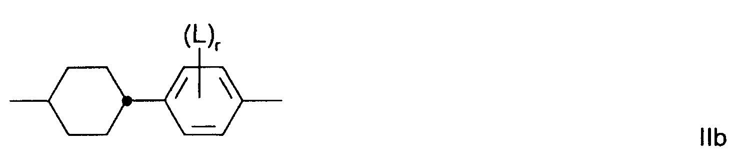 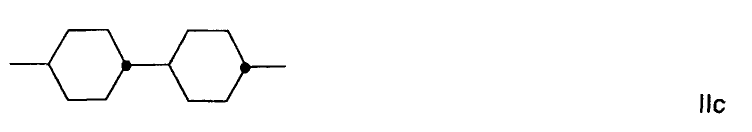 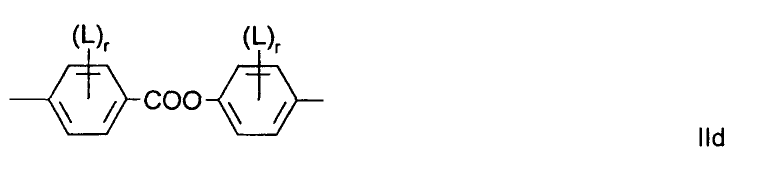 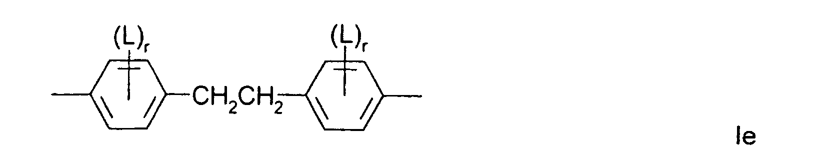 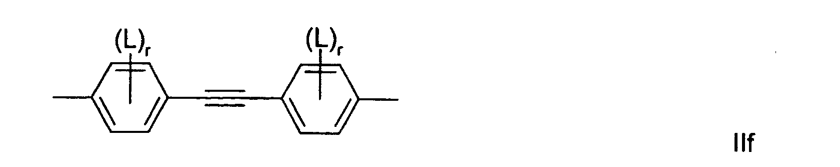 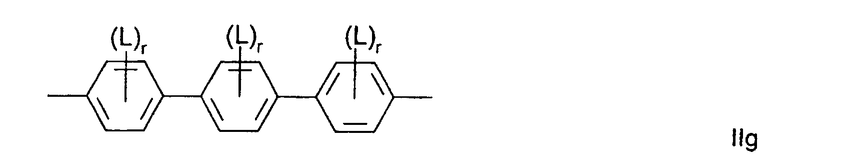 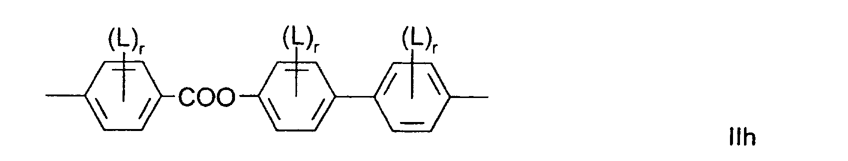 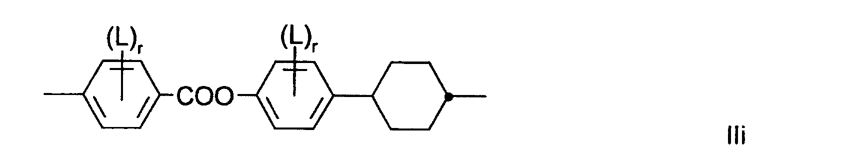 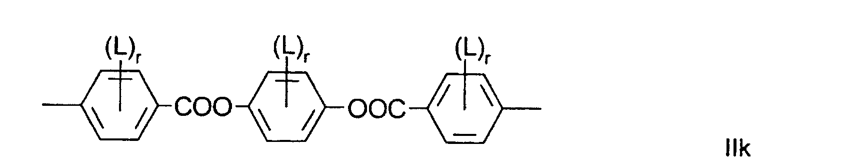 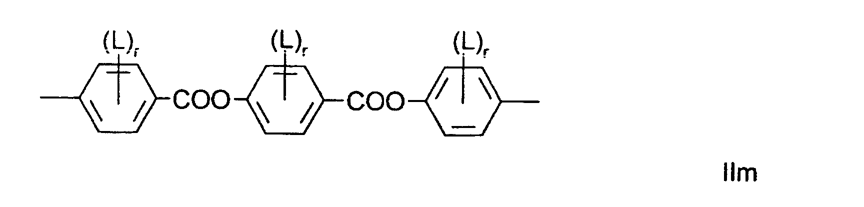 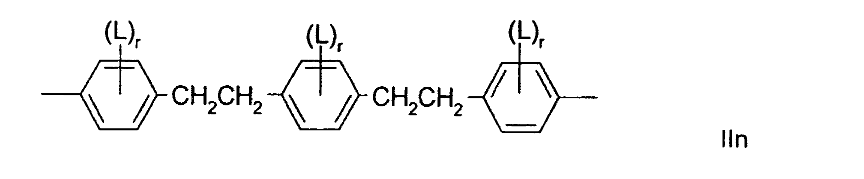 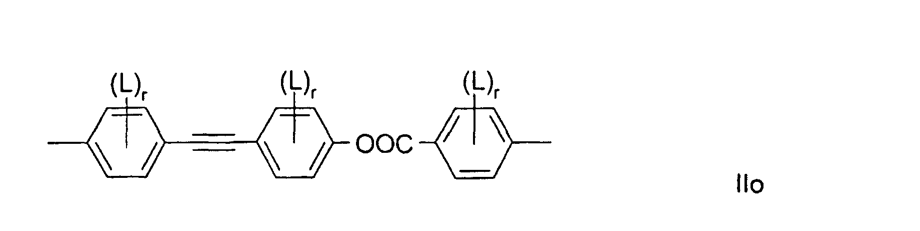 dans lesquelles r vaut 0, 1 ou 2 et L est F, Cl, CN, OH, NO₂ ou un groupe alkyle, alkoxy ou alkanoyle en option fluoré ou chloré avec de 1 à 7 atomes C.

9. Matériau de cristaux liquides polymérisable selon au moins l'une des revendications 1 à 8, **caractérisé en ce que** les composés tensio-actifs polymérisables sont choisis à partir des formules qui suivent
CₙF₂ₙ₊₁SO₂N(C₂H₅)CH₂CH₂OCOCH=CH₂ IX
CₙF₂ₙ₊₁SO₂N(C₂H₅)CH₂CH₂OCOC(CH₃)=CH₂ X
dans lesquelles n est un entier compris entre 4 et 8 et le groupe perfluoroalkyle peut être linéaire ou dérivé.

10. Matériau de cristaux liquides polymérisable selon au moins l'une des revendications 1 à 9, **caractérisé en ce qu'**il est essentiellement constitué par :
a) 5% à 80% en poids de composés mésogènes monoréactifs comportant un groupe terminal polaire,
b) 10% à 90% en poids de composés mésogènes polymérisables biréactifs,
c) 0,1% à 15% en poids de dopants chiraux non polymérisables,
d) 0,5% à 10% en poids d'un initiateur de polymérisation,
e) 0,01 % à 6% en poids d'un ou de plusieurs composés tensio-actifs polymérisables.

11. Matériau de cristaux liquides polymérisable selon au moins l'une des revendications 1 à 9, **caractérisé en ce qu'**il est essentiellement constitué par :
a) 0% à 30% en poids de composés mésogènes monoréactifs comportant un groupe terminal polaire,
b) 90% ou plus en poids de composés mésogènes polymérisables biréactifs,
c) 0, 1 % à 15% en poids de dopants chiraux non polymérisables,
d) 0,5% à 10% en poids d'un initiateur de polymérisation,
e) 0,01% à 6% en poids d'un ou de plusieurs composés tensio-actifs polymérisables.

12. Matériau de cristaux liquides polymérisable selon au moins l'une des revendications 1 à 9, **caractérisé en ce qu'**il est essentiellement constitué par
a) 80% ou plus en poids de composés mésogènes monoréactifs comportant un groupe terminal polaire,
b) 0% à 20% en poids de composés mésogènes polymérisables biréactifs,
c) 0,1% à 15% en poids de dopants chiraux non polymérisables,
d) 0,5% à 10% en poids d'un initiateur de polymérisation,
e) 0,01% à 6% en poids d'un ou de plusieurs composés tensio-actifs polymérisables.

13. Procédé de préparation d'un film en polymère anisotrope avec un alignement plan moyennant un faible angle d'inclinaison, en appliquant un matériau de cristaux liquides polymérisable selon au moins l'une des revendications 1 à 12 sur un substrat, en alignant le matériau selon une orientation plane et en polymérisant le matériau.

14. Film en polymère anisotrope avec alignement plan obtenu à partir d'un mélange de cristaux liquides polymérisable selon au moins l'une des revendications 1 à 12.

15. Film en polymère anisotrope selon la revendication 14, **caractérisé en ce que** l'angle d'inclinaison est inférieur à 3°.

16. Film en polymère anisotrope selon au moins l'une des revendications 14 et 15, **caractérisé en ce qu'**il présente une orientation moléculaire vrillée en hélice.

17. Utilisation d'un matériau de cristaux liquides polymérisable selon au moins l'une des revendications 1 à 12 ou d'un film en polymère selon au moins l'une des revendications 14 à 16 pour des dispositifs optiques, un usage décoratif ou de sécurité, tel que par exemple dans des polariseurs, des compensateurs, des séparateurs de faisceau, des couches d'alignement, des films réfléchissants, des filtres couleur, des éléments holographiques, des feuilles à marquage à chaud, des images colorées, des marquages décoratifs ou de sécurité et pour la préparation de pigments de cristaux liquides pour des applications décoratives ou de sécurité.

18. Filtre couleur comprenant un mélange de cristaux liquides polymérisable selon au moins l'une des revendications 1 à 12 ou au moins un film en polymère selon au moins l'une des revendications 14 à 16.

19. Couche d'alignement comprenant un mélange de cristaux liquides polymérisable selon au moins l'une des revendications 1 à 12 ou au moins un film en polymère selon au moins l'une des revendications 14 à 16.
